# EUROPEAN PATENT SPECIFICATION

(11) **EP 1 808 586 B1**
(45) Date of publication and mention of the grant of the patent: **21.05.2014**
(21) Application number: 07000878.4
(22) Date of filing: 17.01.2007
(51) Int. Cl.: F02B 27/02, F02M 35/10, F02M 35/16

(54) **Vehicle**
Fahrzeug
Véhicule

(30) Priority: 20.09.2006 JP 2006253638; 17.01.2006 JP 2006009139
(43) Date of publication of application: 18.07.2007
(73) Proprietor: Yamaha Hatsudoki Kabushiki Kaisha, Iwata-shi, Shizuoka 438-8501 (JP)
(72) Inventor: Yokoi, Masato, Shizuoka-ken 438-8501 (JP)
(74) Representative: Grünecker, Kinkeldey, Stockmair & Schwanhäusser

(56) References cited:
- DE-A1- 19 717 272
- DE-B- 1 009 429
- JP-U- H0 387 825
- US-A- 4 890 586

## Description

The present invention relates to a vehicle, and more particular, to a vehicle provided with a funnel through which the air is led to an intake port of an engine.

Conventionally, there are known motorcycles (vehicles) provided with a funnel through which the air is led to an intake port of an engine (see, for example, Patent Document 1). Patent Document 1 discloses a motorcycle provided with a funnel which is divided into two parts.

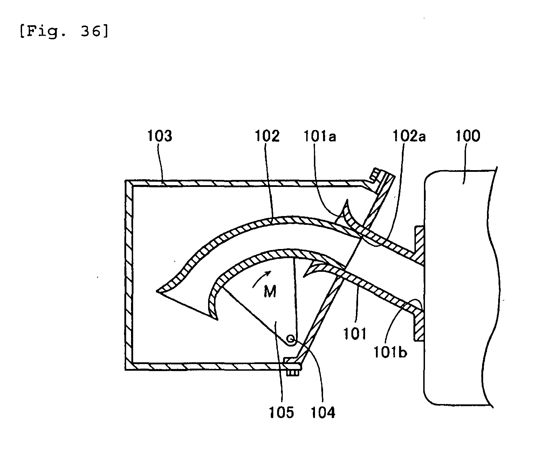

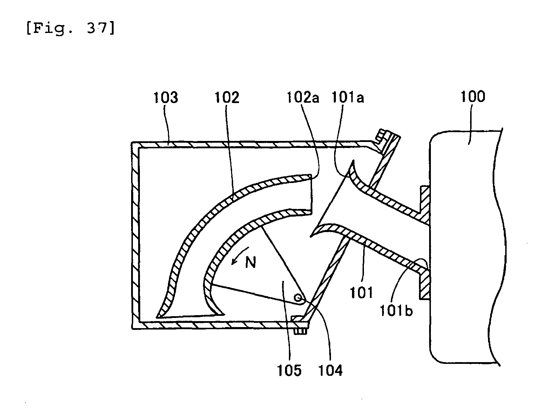

Figs. 36 and 37 are cross sectional views illustrating a construction of a funnel of a conventional motorcycle disclosed in Patent Document 1. First, referring to Fig. 36, a funnel of a conventional motorcycle comprises a stationary funnel 101 and a moving funnel 102. The stationary funnel 101 is fixed to a cleaner box 103, to which the air purified by an air filer (not shown) is supplied. An intake-side opening 101a of the stationary funnel 101 is arranged in the cleaner box 103 and an opening 101b on an opposite side to the intake side is connected to an intake port (not shown) on which an intake valve of an engine 100 is arranged.

The moving funnel 102 is arranged in the cleaner box 103 so as to be movable in the cleaner box 103. Specifically, the moving funnel 102 is supported in the cleaner box 103 by a single turning lever 105 which turns about a support shaft 104. Therefore, as shown in Fig. 36, in the case where the turning lever 105 is turned in an M direction, an opening 102a of the moving funnel 102 toward the stationary funnel 101 is moved in a direction close to the opening 101a of the stationary funnel 101. On the other hand, as shown in Fig. 37, in the case where the turning lever 105 is turned in an N direction, the opening 102a of the moving funnel 102 toward the stationary funnel 101 is moved in a direction away from the opening 101 a of the stationary funnel 101.

Next, an operation of the conventional motorcycle will be described with reference to Figs. 36 and 37.

First, in the case where the engine 100 rotates at low speed, an intake pipe connected to the engine 100 from the cleaner box 103 is made long in order to make it easy to obtain a pulsation effect. Note that the pulsation effect is to achieve an improvement in intake efficiency through adjustment of the length of an intake pipe to have high pressure waves approaching a neighborhood of the intake pipe. That is, in the case where the engine 100 rotates at low speed, the opening 102a of the moving funnel 102 is connected to the opening 101a of the stationary funnel 101 by turning the turning lever 105 in the M direction as shown in Fig. 36. Thereby, the intake pipe connected to the engine 100 from the cleaner box 103 is made long since the intake pipe connected to the engine 100 from the cleaner box 103 is constituted by the stationary funnel 101 and the moving funnel 102.

In the case where the engine 100 rotates at high speed, the intake pipe connected to the engine 100 from the cleaner box 103 is made short in order to make it easy to obtain a pulsation effect. That is, in the case where the engine 100 rotates at high speed, the opening 102a of the moving funnel 102 is separated from the opening 101 a of the stationary funnel 101 by turning the turning lever 105 in the N direction as shown in Fig. 37. Thereby, the intake pipe connected to the engine 100 from the cleaner box 103 is made short since the intake pipe connected to the engine 100 from the cleaner box 103 is constituted only by the stationary funnel 101.
Patent Document 1: JP-A-9-100720

With the construction of Patent Document 1 shown in Figs. 36 and 37, however, there is generated an inconvenience that the air is increased in flow resistance in the case where the moving funnel 102 is separated from the stationary funnel 101 (in the case where the engine 100 rotates at high speed). Specifically, with Patent Document 1, the single turning lever 105 moves the moving funnel 102 as shown in Fig. 37, so that an opened surface of the opening 102a of the moving funnel 102 is inclined to an opened surface of the opening 101a of the stationary funnel 101 in the case where the moving funnel 102 is separated from the stationary funnel 101. Therefore, the air passing through the moving funnel 102 to be sucked by the stationary funnel 101 is bent in flow direction, and the air is increased in flow resistance. Consequently, in the case where the moving funnel 102 is separated from the stationary funnel 101, there is caused a problem of a decrease in intake efficiency.

The prior art in document DE 1 009 429 B discloses an intake air duct for an internal combustion engine comprising a plurality of stationary funnels, through which the air is led to an intake port of an engine, and a plurality of moving funnels arranged moveably on an intake side of the stationary funnels and cooperating with the stationary funnels to have the air led to the intake port of the engine. According to DE 1 009 429 B, the moving funnels are guided via guiding arms.

The invention has been thought of in order to solve the above-described problem and has its one object to provide a vehicle capable of inhibiting a decrease in intake efficiency in the case where a moving funnel is separated from a stationary funnel.

This objective is solved by a vehicle comprising: a plurality of stationary funnels, through which the air is led to an intake port of an engine, a plurality of moving funnels arranged movably on an intake side of the stationary funnel and cooperating with the stationary funnel to have the air led to the intake port of the engine, and a parallel link mechanism including a plurality of link levers, which movably support the moving funnels. Furthermore, the plurality of link levers moveably support the moving funnels via a connecting portion that includes an upper connecting section connecting two adjacent moving funnels and being formed integral with the two adjacent moving funnels, and a lower connecting section connecting the two adjacent moving funnels and being formed integral with the two adjacent moving funnels. Thereby, the Plurality of link levers include an upper link lever moveably supporting the upper connecting section of the connecting portion of the two respective adjacent moving funnels and being shared by said two adjacent moving funnels which are connected to each other through the upper connecting section, and a lower link lever moveably supporting the lower connecting section of the connecting portion of the two respective adjacent moving funnels and being shared by said two adjacent moving funnels which are connected to each other through the lower connecting section.

Preferably, the link levers are mounted to the stationary funnels to be turnable.

Further, preferably in the case where the engine rotates at high speed, the link levers turn in a first direction whereby an opening of the moving funnels toward the stationary funnels is moved to a first position away from an opening of the stationary funnels on an intake side, and in the case where the engine rotates at low speed, the link levers turn in a second direction in opposition to the first direction whereby the opening of the moving funnels toward the stationary funnels is moved to a second position to abut against the opening of the stationary funnels on the intake side.

Still further, preferably turning amounts of the link levers are adjusted so that an opened surface of the moving funnels on the intake side of the stationary funnels in the first position and an opened surface of the moving funnels on the intake side of the stationary funnels in the second position are positioned in the same manner as viewed in a direction in which the stationary funnels are opened.

Still further still, the moving funnels comprises an upper support shaft and a lower support shaft, and the stationary funnels comprises an upper rotating shaft and a lower rotating shaft, and wherein the upper support shaft and the upper rotating shaft are connected to each other through an upper link lever, and the lower support shaft and the lower rotating shaft are connected to each other through a lower link lever.

Preferably, a position of the upper support shaft in the first position, as viewed in a direction in which the stationary funnels are opened, and a position of the upper support shaft in the second position, as viewed in a direction in which the stationary funnels are opened, are the same, and a position of the lower support shaft in the first position, as viewed in a direction in which the stationary funnels are-is opened, and a position of the lower support shaft in the second position, as viewed in a direction in which the stationary funnels are opened, are the same.

Further, preferably a position of the upper support shaft in the first position, as viewed in a direction in which the stationary funnels are opened, and a position of the lower support shaft in the first position, as viewed in a direction in which the stationary funnels are opened, are the same, and a position of the upper support shaft in the second position, as viewed in a direction in which the stationary funnels are opened, and a position of the lower support shaft in the second position, as viewed in a direction in which the stationary funnels are opened, are the same.

Still further, preferably a support shaft supported by the link levers is provided integrally on two adjacent moving funnels and the link levers comprise a fitting portion fitted onto the support shaft to be turnable.

Still further yet, preferably the engine comprises a plurality of cylinders, a stationary funnel and a moving funnel are respectively provided on every cylinder of the engine, and two adjacent moving funnels are formed integrally with each other through the support shaft which connects between said adjacent moving funnels.

According to another preferred embodiment, the vehicle further comprises bushes mounted to the support shafts to permit the link levers to turn relative to the support shafts, wherein the bushes are structured to comprise a first split extending axially of the respective support shaft and to be elastically deformable so that a split width of the first split is increased.

According to yet another preferred embodiment, the vehicle further comprises ribs provided on the support shafts to engage with the first split of the bushes.

According to still another preferred embodiment, the vehicle further comprises flange portions provided on an end of the bushes to project radially of the respective support shaft and formed integrally with the respective first split, and the first split positioned on the flange portion of the respective bush is formed so that a split width is gradually increased in a direction in which the flange portion projects.

Preferably, the support shafts comprises a small-diameter portion to which a bush is mounted, the ribs of the support shafts comprises a first rib and a second rib, the first rib of the respective support shaft is formed on an outer surface of the small-diameter portion to extend axially of the respective support shaft, and the second rib of the respective support shaft is formed on an end of the small-diameter portion to extend radially of the respective support shaft.

Further, preferably the fitting portions of the link levers are structured to comprise a second split extending axially of the respective support shaft and to be elastically deformable so that a split width of the second split is increased.

According to another preferred embodiment, the vehicle comprises a rotating shaft to turn the link levers, wherein the link levers are provided with a rotating shaft support hole into which the rotating shaft is inserted so that the link levers turn together with the rotating shaft, and struts are provided integrally on the stationary funnels to support an end of the rotating shaft rotatably so that the rotating shaft is not moved axially.

Preferably, the rotating shaft comprises a step to abut against an opened end of the rotating shaft support hole on the respective strut.

Further, preferably the link levers comprise a first stopper to abut against an abutment member to restrict turning of the link levers in the first direction in the case where the link levers turn in the first direction to have the moving funnels reached the first position, and a second stopper to abut against the abutment member to restrict turning of the link levers in the second direction in the case where the link levers turn in the second direction to have the moving funnels reached the second position.

According to another preferred embodiment, the vehicle further comprises a moving member to support and move the link levers, and a bias member to bias the moving member, wherein a biasing force of the bias member is transmitted to the link levers through the moving member whereby the link levers are turned, in the case where turning of the link levers in the first direction causes the first stopper to abut against an abutment member, a biasing force of the bias member is transmitted to the link levers through the moving member so that the link levers turn in the first direction, and in the case where turning of the link levers in the second direction causes the second stopper to abut against an abutment member, a biasing force of the bias member is transmitted to the link levers through the moving member so that the link levers turn in the second direction.

Preferably, the abutment member comprises a strut provided integrally on the respective stationary funnels.

Further, preferably the stationary funnels comprises a screw insertion hole into which a screw is insertable, and is mounted to the engine by means of the screw inserted into the screw insertion hole, and the screw insertion hole of the respective stationary funnel is provided on an inner surface thereof with an engagement portion which is structured to engage with a head of the screw and to be elastically deformable toward an outside of the screw insertion hole from an inside thereof.

According to yet another preferred embodiment, the vehicle further comprises an elastic member mounted to an end of the moving funnels toward the stationary funnels. Preferably, a rotating shaft which turns the plurality of link levers is made of a metal, the plurality of link levers are made of a resin, and the rotating shaft made of a metal and the plurality of link levers made of a resin are formed integrally.

Further, preferably the rotating shaft made of a metal is shaped not to rotate at joints with the link levers made of a resin.

Still further, preferably the rotating shaft is shaped in the form of a round rod and the joint at which the rotating shaft in the form of a round rod joins the link levers includes a flat surface portion.

Yet further still, preferably the rotating shaft is shaped in the form of a round rod and the joint at which the rotating shaft in the form of a round rod joins the link levers includes an irregular portion provided along an outer periphery of the rotating shaft.

According to another preferred embodiment, the vehicle further comprises a casing portion, in which the stationary funnels and the moving funnels are arranged, and an air filter arranged in the casing portion to purify the air led to the intake port of the engine, wherein the parallel link mechanism including the rotating shaft and the plurality of link levers is arranged downstream of the air filter.

Preferably, the plurality of the moving funnels are connected to constitute a funnel portion, and the link levers are arranged to support center portions of gravity of the plurality of funnel portions.

In the following, the present invention is explained in greater detail with respect to several embodiments thereof in conjunction with the accompanying drawings, wherein:
- Fig. 1: is a side view showing the whole construction of a motorcycle according to a first embodiment,
- Fig. 2: is a plan view showing the neighborhood of funnels of the motorcycle, according to the first embodiment, shown in Fig. 1,

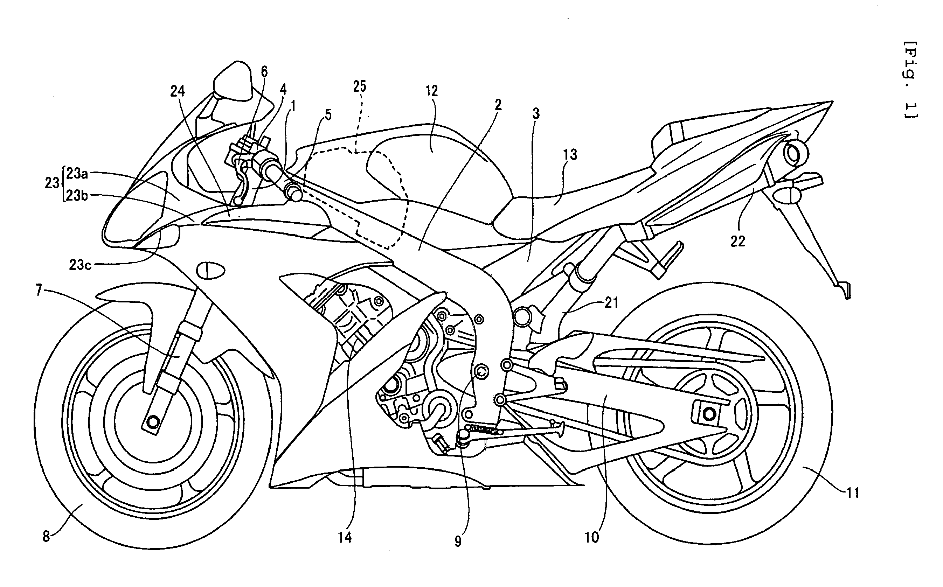

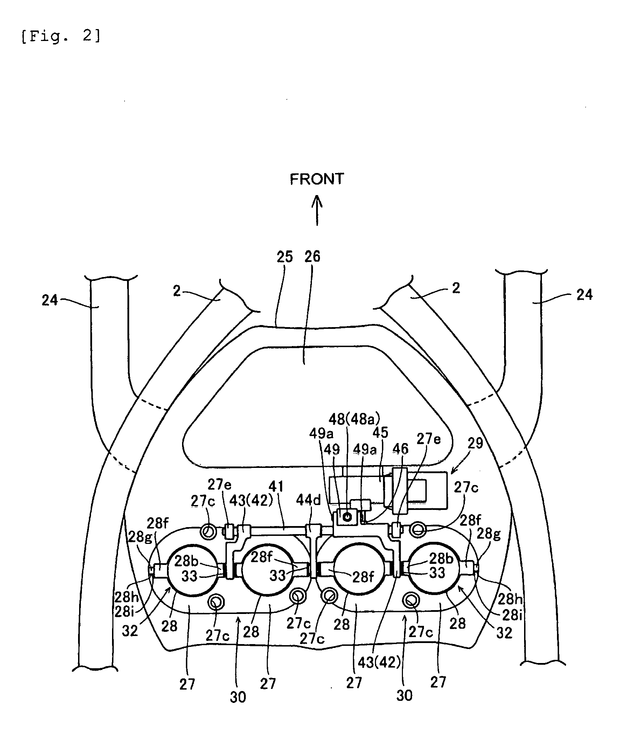

- Fig. 2: is a side view showing the neighborhood of the funnels of the motorcycle, according to the first embodiment, shown in Fig. 1,

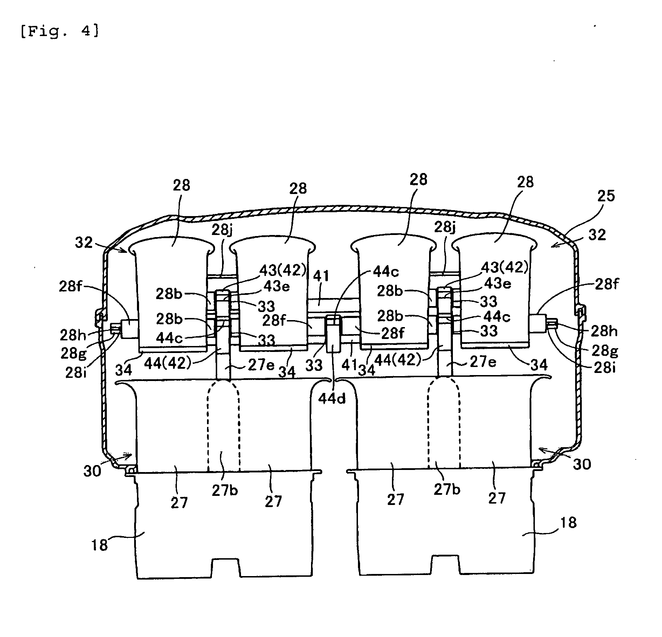

- Fig. 4: is a front view showing the neighborhood of the funnels of the motorcycle, according to the first embodiment, shown in Fig. 1,

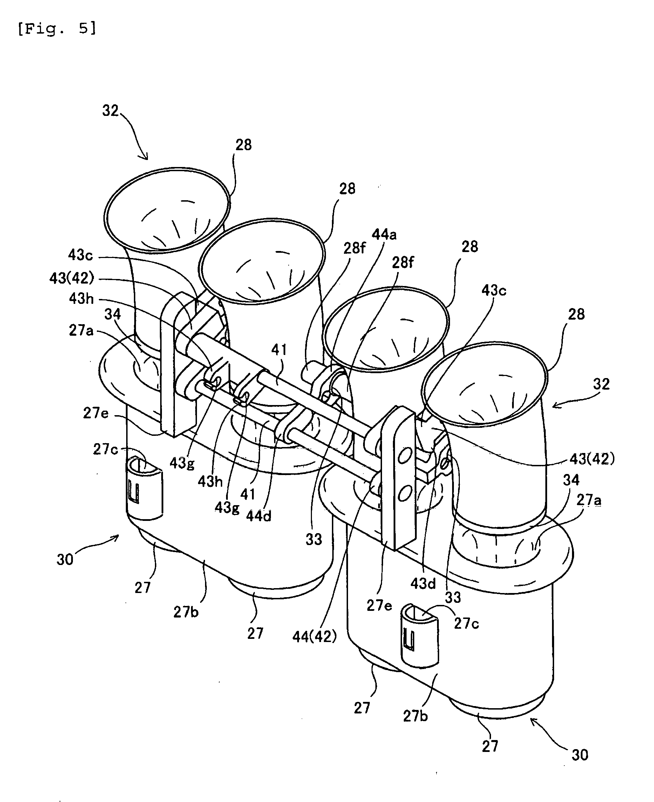

- Fig. 5: is a perspective view showing moving funnels of the motorcycle, being moved to a separate position, according to the first embodiment, shown in Fig. 1,

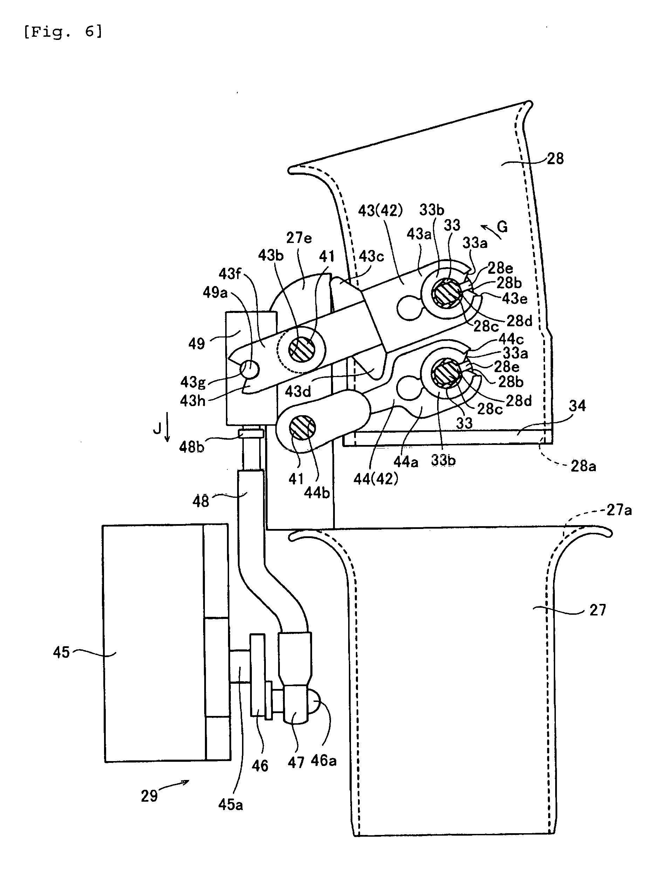

- Fig. 6: is a side view showing the moving funnels of the motorcycle, being moved to the separate position, according to the first embodiment, shown in Fig. 1,

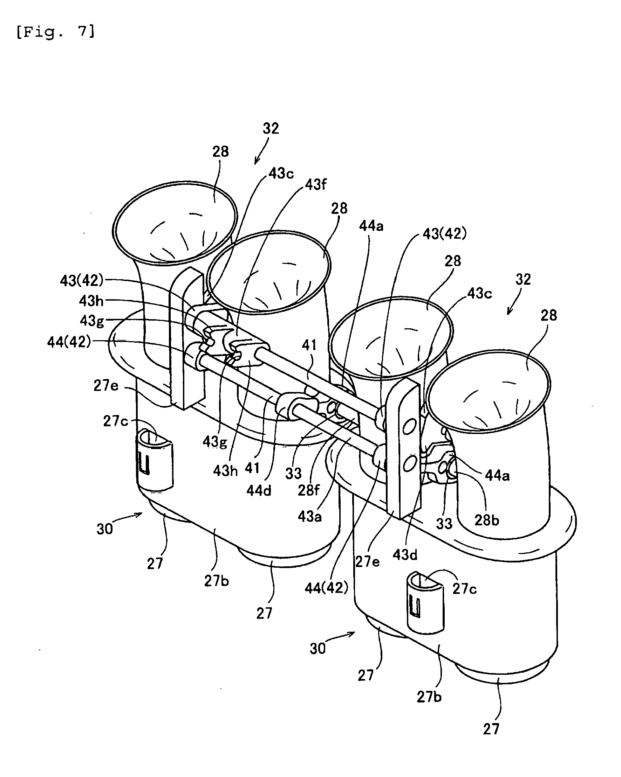

- Fig. 7: is a perspective view showing the moving funnels of the motorcycle, being moved to an abutting position, according to the first embodiment, shown in Fig. 1,

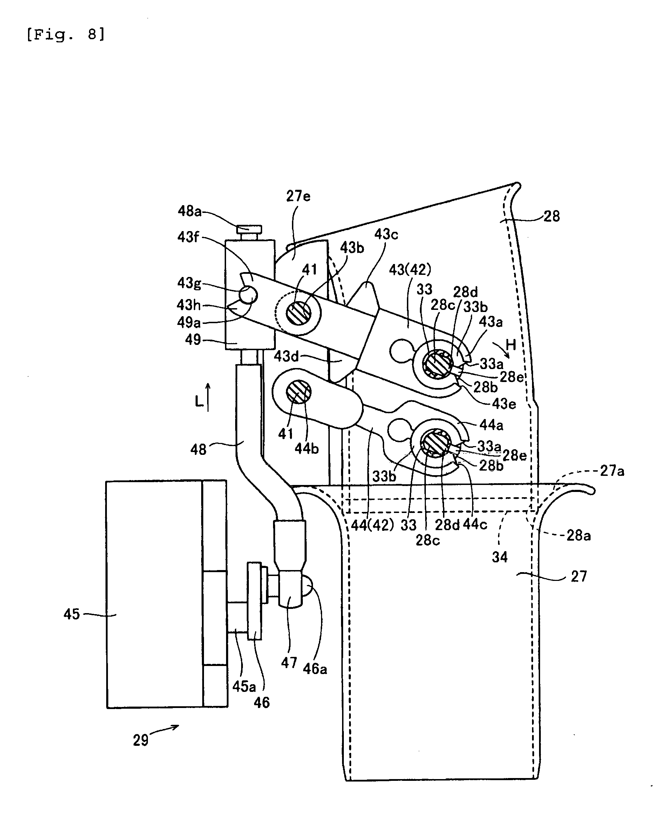

- Fig. 8: is a side view showing the moving funnels of the motorcycle, being moved to the abutting position, according to the first embodiment, shown in Fig. 1,

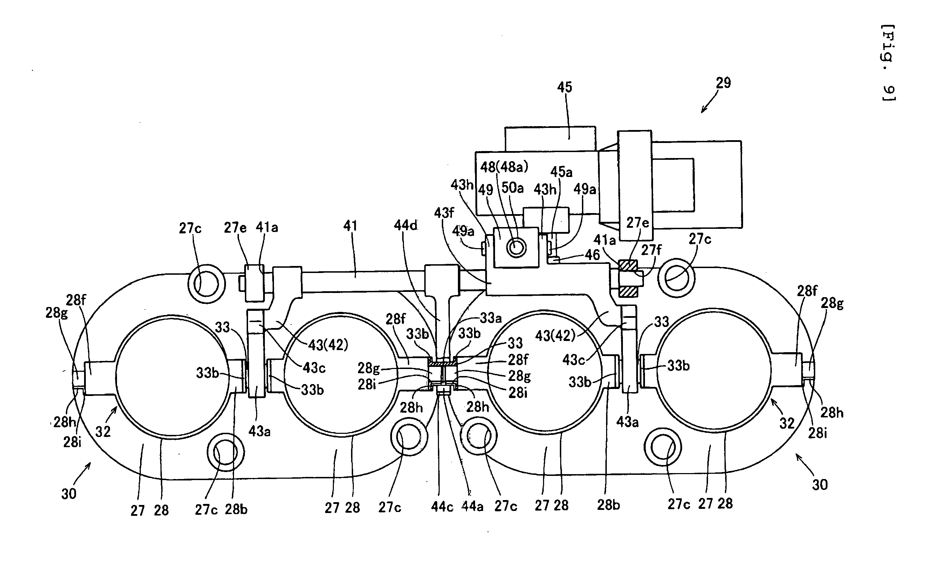

- Fig. 9: is a plan view illustrating the detailed construction of the neighborhood of the funnels of the motorcycle, according to the first embodiment, shown in Fig. 1,

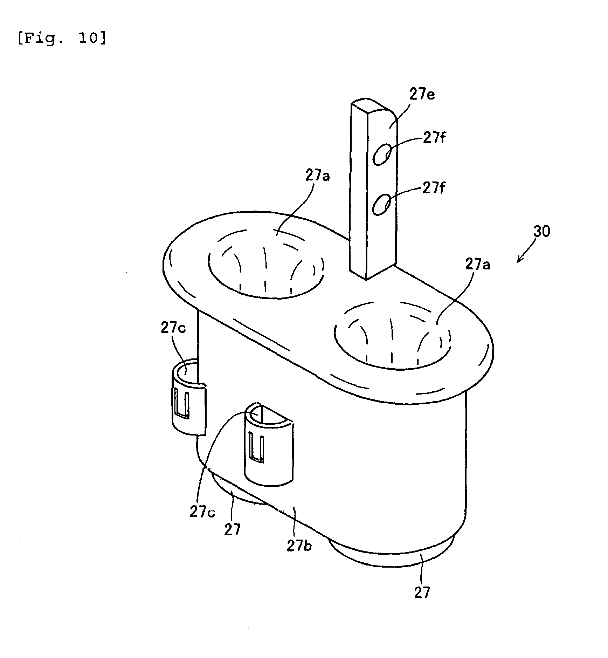

- Fig. 10: is a perspective view showing a stationary funnel of the motorcycle, according to the first embodiment, shown in Fig. 1,

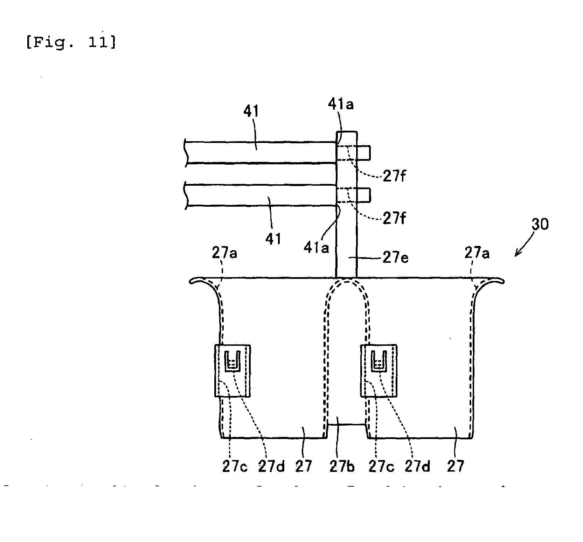

- Fig. 11: is a front view showing the stationary funnel of the motorcycle, according to the first embodiment, shown in Fig. 1,

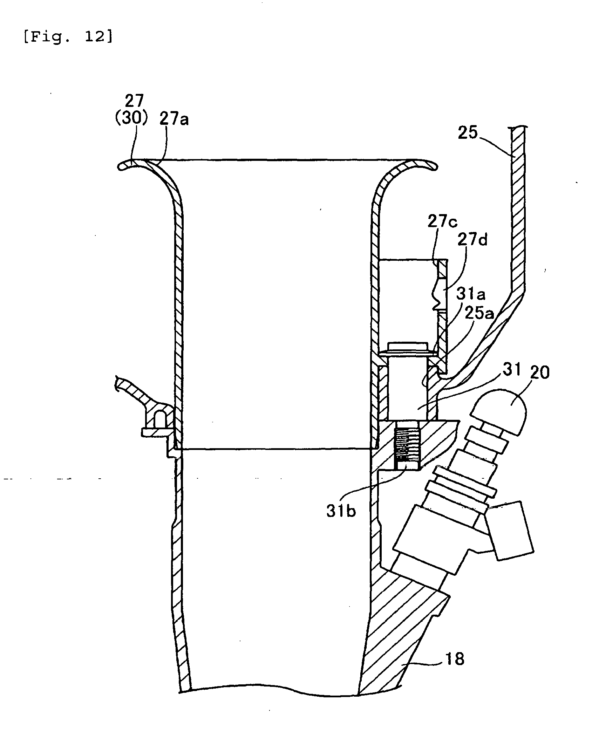

- Fig. 12: is a cross sectional view showing the construction of a screw insertion hole of the stationary funnel shown in Figs. 10 and 11,

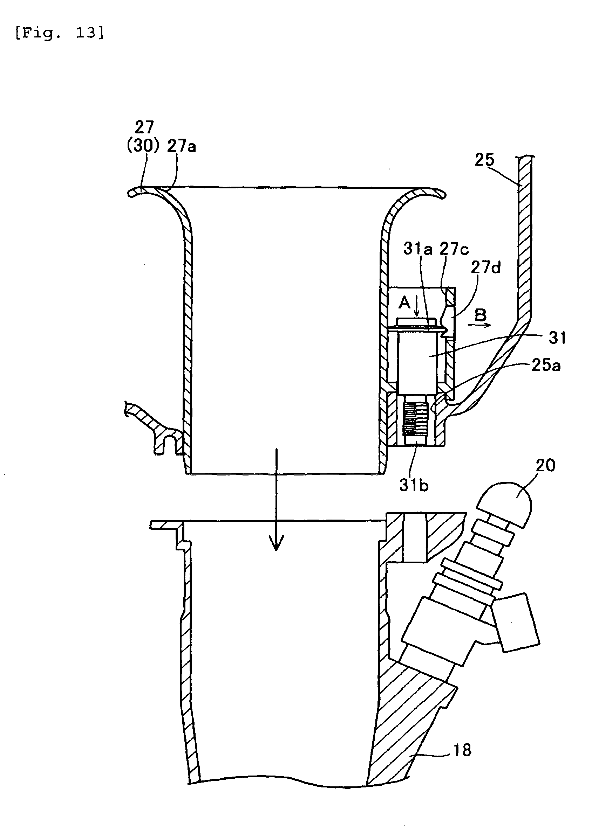

- Fig. 13: is a cross sectional view showing the construction of a screw insertion hole of the stationary funnel shown in Figs. 10 and 11,

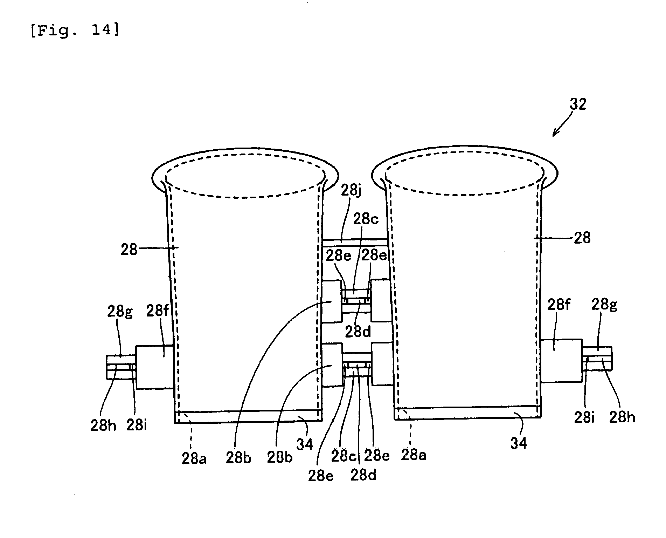

- Fig. 14: is a front view showing the moving funnels of the motorcycle, according to the first embodiment, shown in Fig. 1,

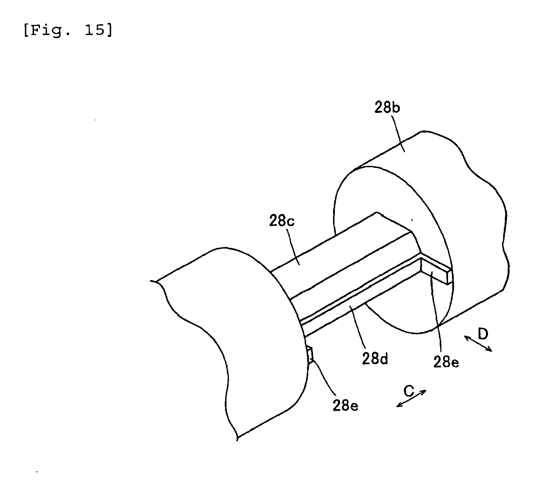

- Fig. 15: is a perspective view showing the construction of a support shaft for the moving funnels shown in Fig. 14,

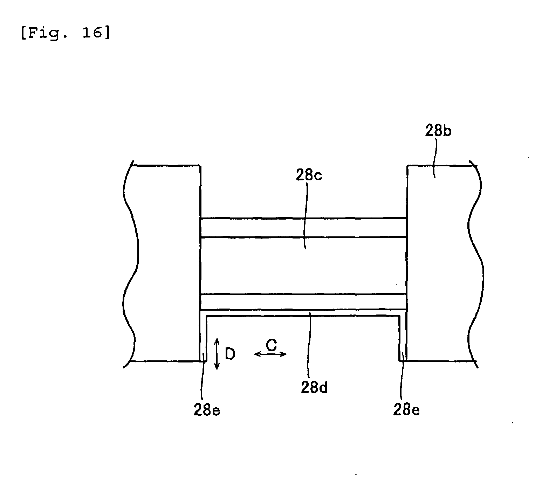

- Fig. 16: is a plan view showing the construction of the support shaft for the moving funnels shown in Fig. 14,

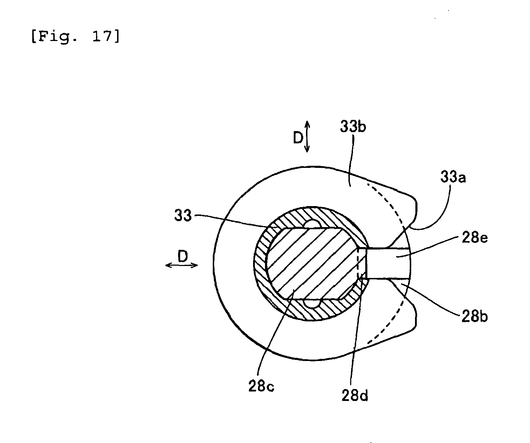

- Fig. 17: is a side view showing the neighborhood of a split bush used in the motorcycle, according to the first embodiment, shown in Fig. 1,

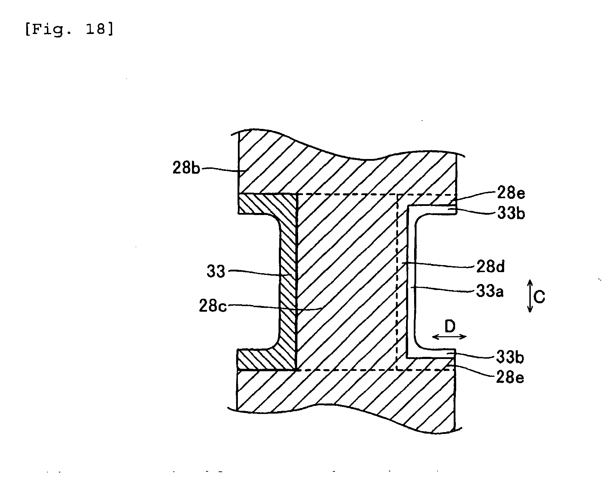

- Fig. 18: is a cross sectional view showing the neighborhood of the split bush used in the motorcycle, according to the first embodiment, shown in Fig. 1,

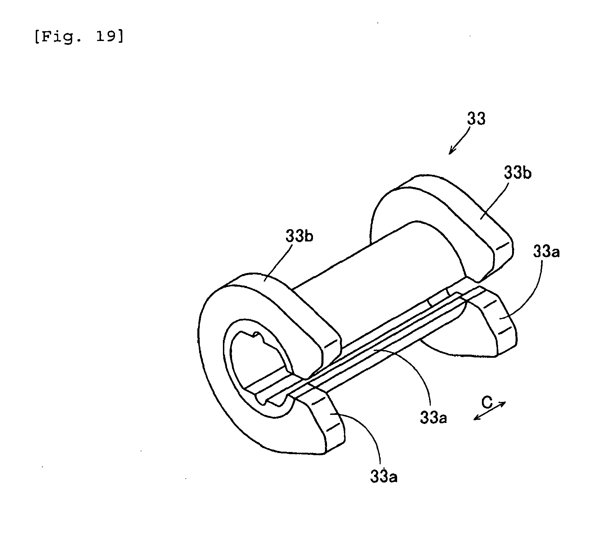

- Fig. 19: is a perspective view showing the split bush used in the motorcycle, according to the first embodiment, shown in Fig. 1,

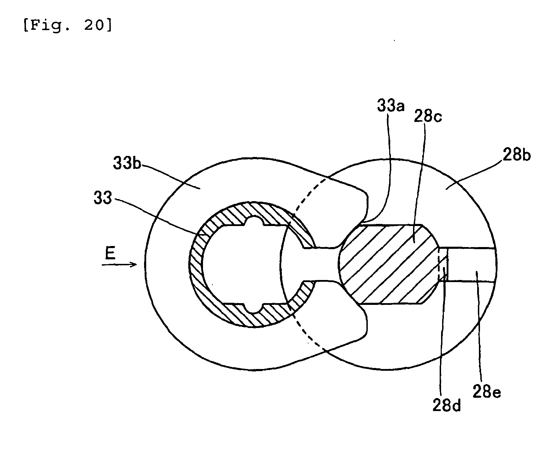

- Fig. 20: is a side view showing the split bush used in the motorcycle, according to the first embodiment, shown in Fig. 1,

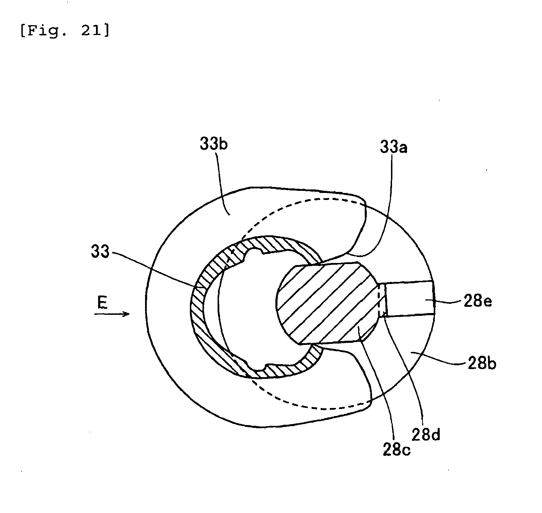

- Fig. 21: is a side view showing the neighborhood of the split bush used in the motorcycle, according to the first embodiment, shown in Fig. 1,

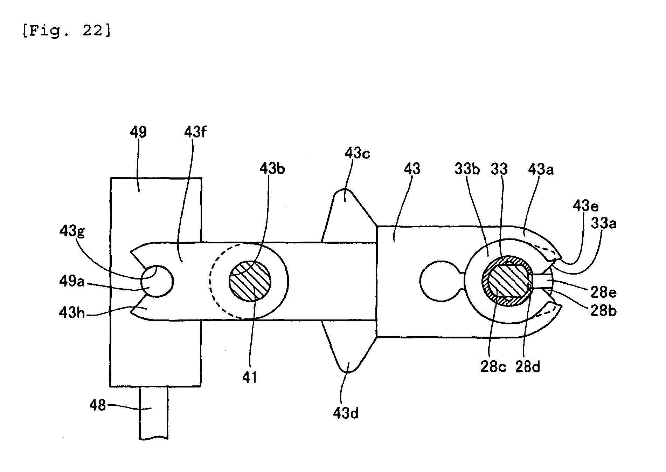

- Fig. 22: is a side view showing the neighborhood of a parallel link used in the motorcycle, according to the first embodiment, shown in Fig. 1,

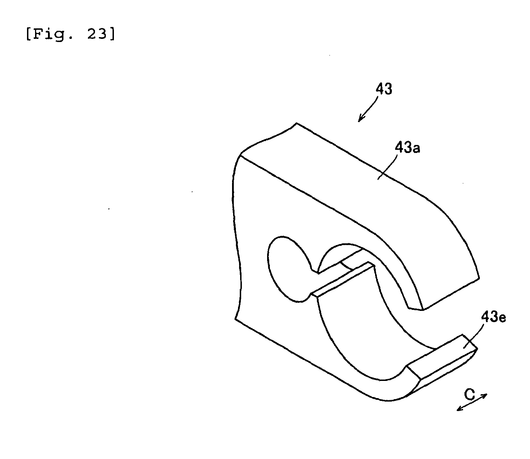

- Fig. 23: is a perspective view illustrating the structure of a fitting portion of the parallel link shown in Fig. 22,

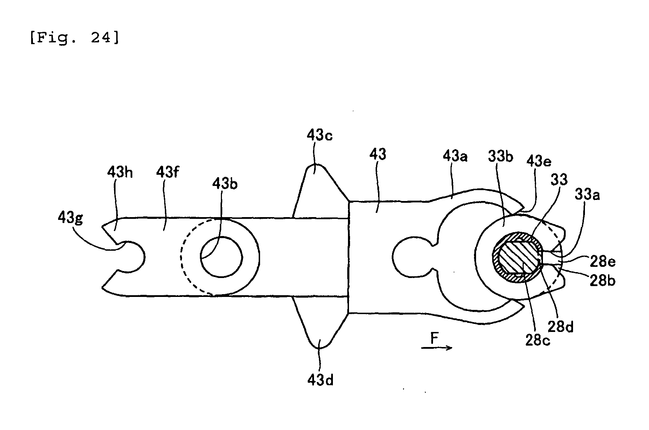

- Fig. 24: is a side view showing the neighborhood of the parallel link used in the motorcycle, according to the first embodiment, shown in Fig. 1,

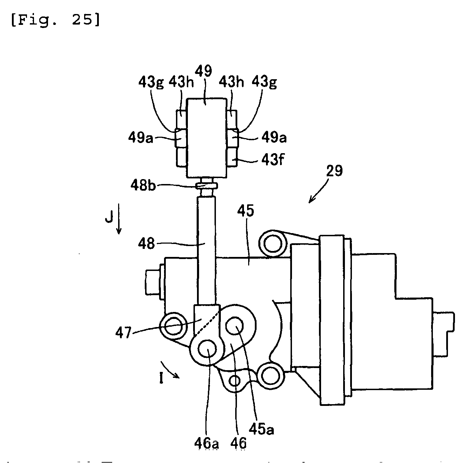

- Fig. 25: is a front view showing a funnel moving mechanism part of the motorcycle, according to the first embodiment, shown in Fig. 1,

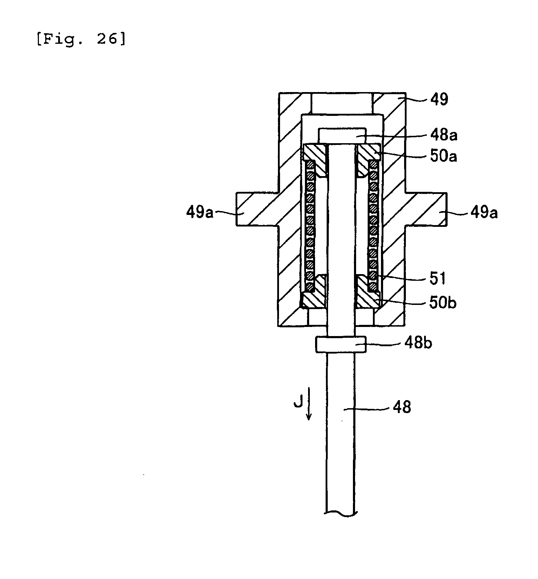

- Fig. 26: is a cross sectional view showing the construction of moving members of the funnel moving mechanism part shown in Fig. 25,

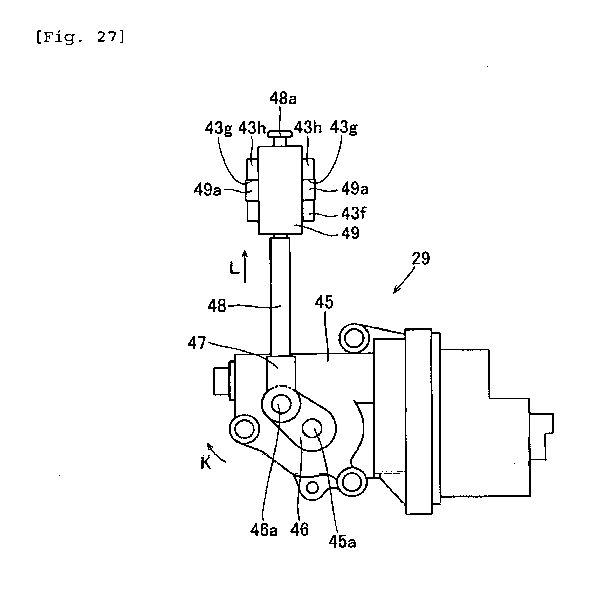

- Fig. 27: is a front view showing the funnel moving mechanism part of the motorcycle, according to the first embodiment, shown in Fig. 1,

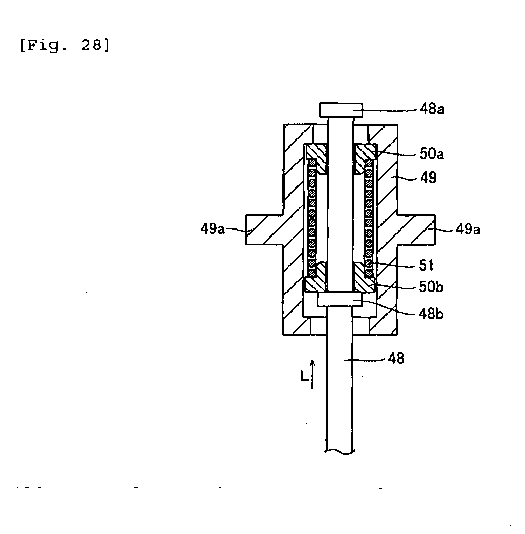

- Fig. 28: is a cross sectional view illustrating the construction of the moving members of the funnel moving mechanism part shown in Fig. 27,

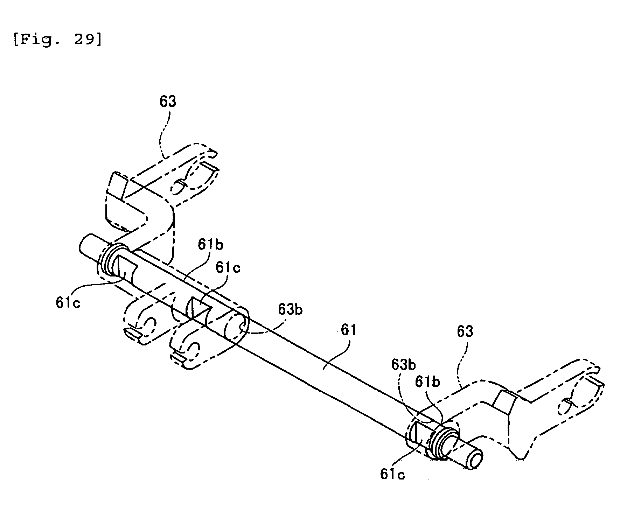

- Fig. 29: is a perspective view illustrating details of the construction of a parallel link of a motorcycle according to a second embodiment,

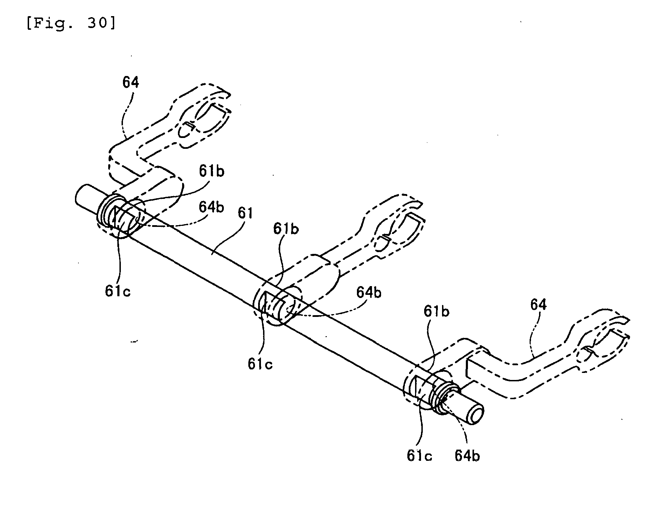

- Fig. 30: is a perspective view illustrating details of the construction of the parallel link of the motorcycle according to the second embodiment,

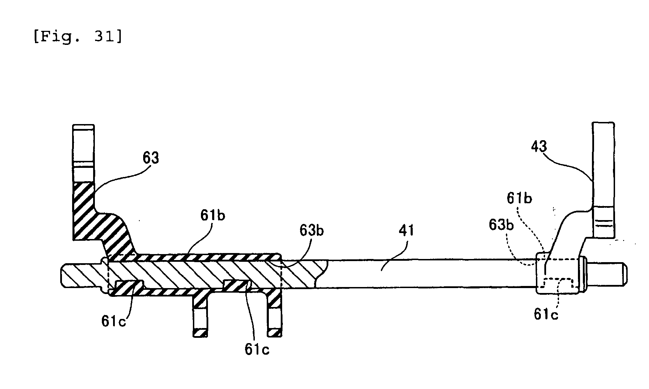

- Fig. 31: is a partial cross sectional view illustrating details of the construction of the parallel link of the motorcycle according to the second embodiment,

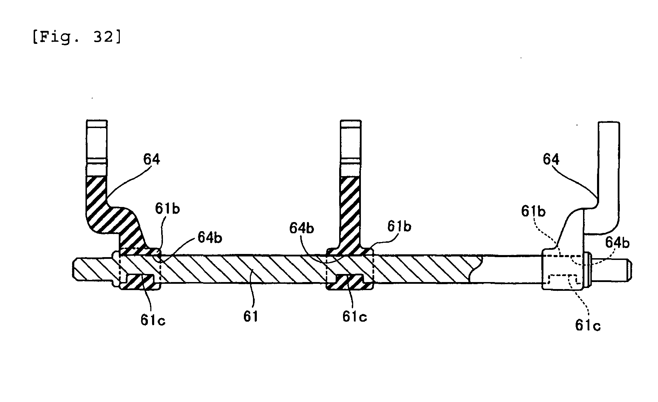

- Fig. 32: is a partial cross sectional view illustrating details of the construction of the parallel link of the motorcycle according to the second embodiment,

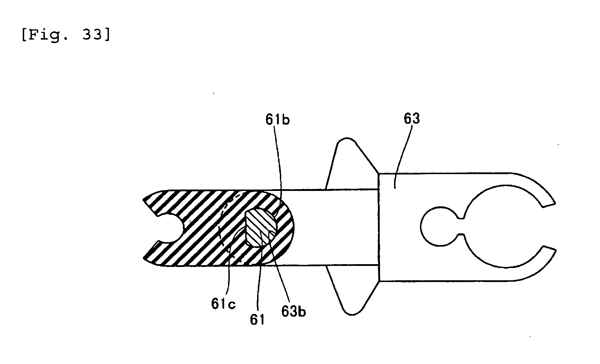

- Fig. 33: is a view illustrating details of the construction of the parallel link of the motorcycle according to the second embodiment,

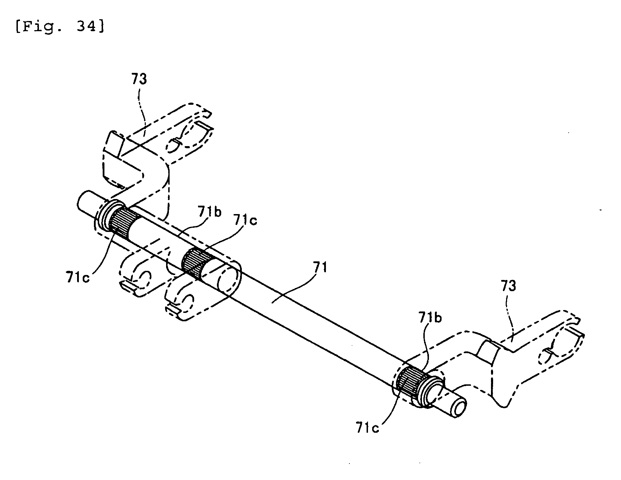

- Fig. 34: is a perspective view illustrating details of the construction of the parallel link of the motorcycle according to a modification of the second embodiment,

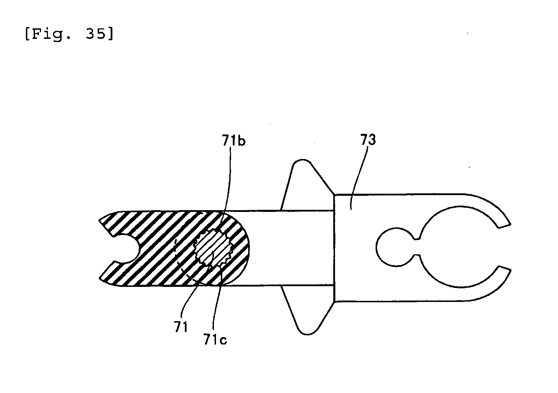

- Fig. 35: is a view illustrating details of the construction of the parallel link of the motorcycle according to a modification of the second embodiment,
- Fig. 36: is a cross sectional view illustrating the construction of a funnel of a conventional motorcycle, and
- Fig. 37: is a cross sectional view illustrating the construction of a funnel of a conventional motorcycle.

### Description of Reference Numerals and Signs:

14: engine
16: cylinder
17a: intake port
25: cleaner box (casing portion)
26: air filter
27: stationary funnel
27a: opening
27c: screw insertion hole
27d: engagement portion
27e: strut (abutment member)
27f: rotating shaft support hole
28: moving funnel
28a: opening
28b: support shaft
28c: small-diameter portion
28d: rib (first rib)
28e: rib (second rib)
31: screw
31a: head
32: part (funnel portion)
33: split bush (bush)
33a: split (first split)
33b: flange portion
34: rubber lip (elastic member)
41, 61, 71: rotating shaft
42: parallel link
43, 63, 73: upper link lever (link lever)
43a, 44a: fitting portion
43b, 44b, 63b, 64b: rotating shaft insertion hole
43c: stopper (first stopper)
43d: stopper (second stopper)
43e, 44c: split portion (second split)
44, 64: lower link lever (link lever)
49: moving member
51: compression spring (bias member)
61b: 71b: joint
61c: flat surface portion
71c: irregular portion
Fig. 2
Front

Embodiments will be described below with reference to the drawings.

### First Embodiment

Fig. 1 is a side view showing the whole construction of a motorcycle according to a first embodiment. Figs. 2 to 28 are views illustrating, in detail, the construction of a funnel of the motorcycle according to the first embodiment, shown in Fig. 1. First, the construction of the motorcycle according to the first embodiment will be described with reference to Figs. 1 to 28.

In the construction of the motorcycle according to the first embodiment, a front end of a main frame 2 is connected to a head pipe 1 as shown in Fig. 1. The main frame 2 is arranged so as to branch and extend left and right toward the front of a vehicle as shown in Fig. 2. The main frame 2 is formed so as to extend rearwardly downward as shown in Fig. 1. Also, a seat rail 3 is connected to the main frame 2 to extend rearwardly upward. A steering mechanism portion 4 is mounted to the head pipe 1 to be turnable. A handle 5 is mounted to an upper side of the steering mechanism portion 4. A clutch lever 6 is mounted to the handle 5. Also, a front fork 7 is mounted to a lower side of the steering mechanism portion 4. A front wheel 8 is mounted rotatably to a lower end of the front fork 7.

Also, a front end of a swing arm 10 is mounted to a rear end of the main frame 2 through a pivot shaft 9. A rear wheel 11 is mounted rotatably to a rear end of the swing arm 10. A fuel tank 12 is arranged above the main frame 2 and a seat 13 is arranged above the seat rail 3. Also, an engine 14 is arranged below the main frame 2.

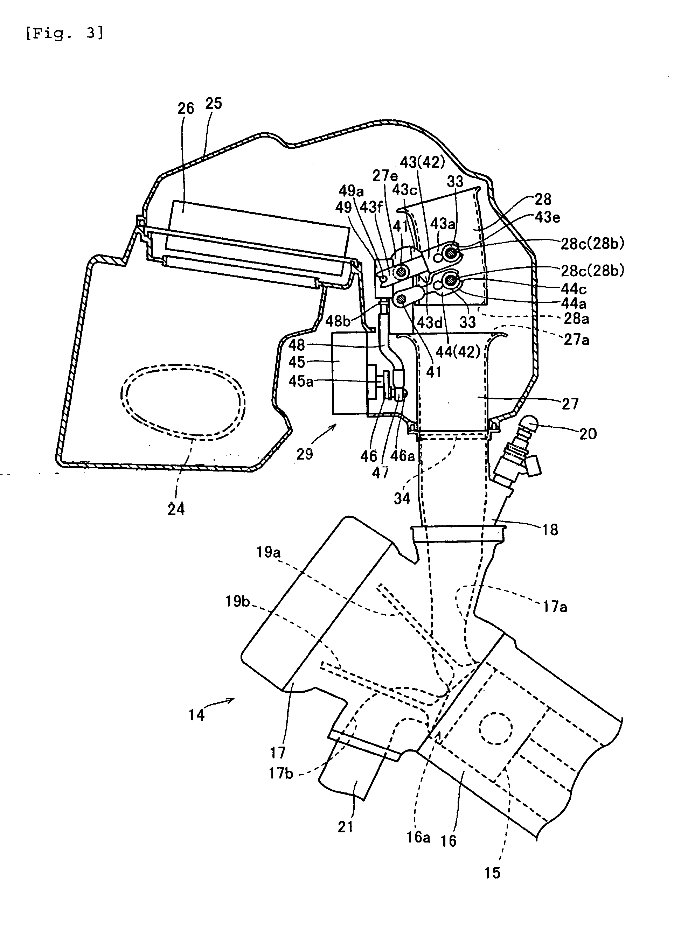

The engine 14 comprises, as shown in Fig. 3, a piston 15, a cylinder 16, a cylinder head 17, and a throttle body 18. The piston 15 is fitted into the cylinder 16 and the cylinder head 17 is arranged so as to close one of the openings of the cylinder 16. Also, the cylinder head 17 is formed with an intake port 17a and an exhaust port 17b. The intake port 17a is provided to permit a mixture of an air and a fuel to be supplied to a combustion chamber 16a of the cylinder 16. Also, the exhaust port 17b is provided to permit residual gases after combustion to be discharged from the combustion chamber 16a of the cylinder 16. An intake valve 19a and an exhaust valve 19b, respectively, are arranged in the intake port 17a and the exhaust port 17b. The throttle body 18 is mounted to an opening of the intake port 17a. Also, an injector 20 is mounted to the throttle body 18 to jet a fuel into the intake port 17a. Also, an exhaust pipe 21 is mounted to an opening of the exhaust port 17b and a muffler 22 (see Fig. 1) is connected to the exhaust pipe 21. Note that while Fig. 3 shows only one cylinder 16, four cylinders 16 are actually arranged at predetermined intervals in a vehicle body width direction. That is, the engine 14 according to the first embodiment comprises four cylinders.

As shown in Fig. 1, a front cowl 23 including an upper cowl 23a and a lower cowl 23b is provided so as to cover a front side of a vehicle. An intake hole 23c is provided on a front side of the lower cowl 23b. Note that while Fig. 1 shows only the intake hole 23c on the left in a vehicle body forward direction, a pair of intake holes 23c is actually arranged symmetrically with respect to the vehicle body forward direction. Also, air ducts 24 are connected to the intake holes 23c of the lower cowl 23b. Also, as shown in Figs. 1 and 2, a cleaner box 25, to which the air from the air ducts 24 is supplied, is arranged between the left-right branching main frame 2. As shown in Figs. 2 and 3, an air filter 26 is arranged in the cleaner box 25 to purify the air supplied from the air ducts 24. Note that the cleaner box 25 is an example of "casing portion" in the present embodiments.

Also, as shown in Figs. 2 to 4, provided in the cleaner box 25 are stationary funnels 27, moving funnels 28, and a funnel moving mechanism part 29. The stationary funnels 27 and the moving funnels 28, respectively, are provided on every cylinder 16 of the engine 14. Also, the stationary funnels 27 are fixed to the cleaner box 25 and have a function of leading the purified air in the cleaner box 25 to the intake port 17a. Also, the moving funnels 28 are arranged on intake sides of the stationary funnels 27 and have a function of cooperating with the stationary funnels 27 to lead the purified air in the cleaner box 25 to the intake port 17a.

Also, as shown in Figs. 5 to 8, the moving funnels 28 are structured to be movable between a separate position (states shown in Figs. 5 and 6), in which openings 28a of the moving funnels 28 toward the stationary funnels 27 are separated from intake side openings 27a of the stationary funnels 27 on intake sides, and an abutting position (states shown in Figs. 7 and 8), in which the openings 28a of the moving funnels 28 abut against the openings 27a of the stationary funnels 27. Here, as shown in Fig. 3, in the case where the moving funnels 28 are moved to the separate position (states shown in Figs. 5 and 6), intake pipes connected to the cylinders 16 from the cleaner box 25 comprise the stationary funnel 27, the throttle body 18, and the intake port 17a. On the other hand, in the case where the moving funnels 28 are moved to the abutting position (states shown in Figs. 7 and 8), intake pipes connected to the cylinders 16 from the cleaner box 25 comprise the moving funnel 28, the stationary funnel 27, the throttle body 18, and the intake port 17a. Also, the funnel moving mechanism part 29 functions to move the moving funnels 28 between the separate position and the abutting position. Note that the separate position and the abutting position, respectively, are examples of "first position" and "second position" in the present embodiments.

Also, as shown in Figs. 9 to 11, the stationary funnels 27 are constructed such that two adjacent stationary funnels 27 are formed integral with each other through a connection 27b. That is, according to the first embodiment, two parts 30 are provided in which two adjacent stationary funnels 27 are made unitary. Also, the parts 30, in which two adjacent stationary funnels 27 are made unitary, respectively, are provided with three screw insertion holes 27c, into which screws 31 (see Fig. 12) are inserted. As shown in Fig. 12, the stationary funnels 27 (the parts 30) together with the cleaner box 25 are mounted to the throttle body 18 by means of the screws 31 inserted into the screw insertion holes 27c. In addition, the cleaner box 25 is also provided with screw insertion holes 25a, into which screws 31 are inserted.

Here, according to the first embodiment, an engagement portion 27d is provided on an inner side of the screw insertion hole 27c of the stationary funnel 27 (the part 30) to engage with a head 31a of the screw 31 and to be elastically deformable toward an outside of the screw insertion hole 27c from an inside thereof. The engagement portion 27d is arranged so that a tip end 31b of the screw 31 engages with the head 31a of the screw 31 in a position in which the tip end 31b does not protrude outside the cleaner box 25. In the case where an external force is applied on the screw 31 in an A direction in a state shown in Fig. 13, the engagement portion 27d is elastically deformed in a B direction whereby the screw 31 is moved in the A direction, so that the tip end 31b of the screw 31 is caused to project outside the cleaner box 25. Also, as shown in Figs. 9 to 11, a strut 27e is provided integrally on the part 30 in which two stationary funnels 27 are made unitary. The strut 27e is formed with a pair of rotating shaft support holes 27f by which ends of rotating shafts 41 described later are supported rotatably. In addition, the strut 27e is an example of "abutment member" in the present embodiments.

Also, according to the first embodiment, the moving funnels 28 are constructed such that two adjacent moving funnels 28 are formed integral with each other through a pair of support shafts 28b as shown in Figs. 9 and 14. That is, according to the first embodiment, there are provided two parts 32 in which two adjacent moving funnels 28 are formed integral with each other. In addition, the parts 32 are examples of "funnel portion" in the present embodiments. Also, the support shafts 28b are arranged between two moving funnels 28 of the part 32. That is, the support shafts 28b are structured to be positioned in the centers of gravity of the part 32. In addition, parallel links 42 described later support the support shafts 28b whereby the moving funnels 28 (the parts 32) are held movably. Also, the support shafts 28b are formed with small-diameter portions 28c, and the small-diameter portions 28c are formed with ribs 28d, 28e. As shown in Figs. 15 and 16, the rib 28d is formed on an outer surface of the small-diameter portion 28c to extend axially (C direction) of the support shaft 28b and the ribs 28e are formed on both ends of the small-diameter portion 28c to extend radially (D direction) of the support shaft 28b. Note that the rib 28d is an example of "first rib" in the present embodiments and the rib 28e is an example of "second rib" in the present embodiments.

Also, as shown in Figs. 9 and 14, support shafts 28f having a small-diameter portion 28g are provided on outer sides of the part 32 in which two adjacent moving funnels 28 are formed integral with each other, and ribs 28h, 28i are formed on the small-diameter portion 28g of the support shaft 28f. The ribs 28h, 28i, respectively, are the same in shape as the ribs 28d, 28e shown in Figs. 15 and 16. That is, the rib 28h is formed on an outer surface of the small-diameter portion 28g to extend axially of the support shaft 28f and the rib 28i is formed on an end of the small-diameter portion 28g toward the moving funnel 28 to extend radially of the support shaft 28f. Also, a reinforcement rib 28j is provided between the two moving funnels 28 of the part 32. Also, as shown in Fig. 9, two parts 32, in each of which two adjacent moving funnels 28 are formed integral with each other, are arranged so that end surfaces of the small-diameter portions 28g of the respective support shafts 28f are opposed to each other.

Also, according to the first embodiment, as shown in Figs. 9, 17, and 18, a split bush 33 is mounted to the small-diameter portion 28c of the support shaft 28b of the moving funnel 28 (the part 32). The split bush 33 functions to tum the parallel links 42 described later relative to the support shafts 28b. Note that the split bush is an example of "bush" in the present embodiments. As shown in Figs. 17 to 19, the split bush 33 includes a split 33a extending axially (C direction) of the support shaft 28b and is structured to be elastically deformable so that a split width of the split 33a is increased. Note that the split 33a is an example of "first split" in the present embodiments. Also, flange portion 33b is provided on both ends of the split bush 33 to project radially (D direction) of the support shaft 28b and formed integral with the splits 33a. The splits 33a positioned on the flange portions 33b are formed so as to be increased in split width in a direction in which the flange portions 33b project. With the split bush 33 structured in the manner described above, the split bush 33 is pushed in an E direction in a state (state in Fig. 20) that the flange portions 33b of the split bush 33 are caused to abut against the small-diameter portion 28c of the support shaft 28b, whereby there comes out a state that the small-diameter portion 28c of the support shaft 28b is interposed by the split 33a of the split bush 33 as shown in Fig. 21. The split bush 33 can be mounted to the small-diameter portion 28c of the support shaft 28b as shown in Fig. 17 by pushing the split bush 33 further in the E direction from the state shown in Fig. 21.

Also, as shown in Figs. 17 and 18, in the state that the split bush 33 is mounted to the small-diameter portion 28c of the support shaft 28b, the split 33a of the split bush 33 engages with the rib 28d in so as to interpose the rib 28d of the support shaft 28b, and the splits 33a positioned on the flange portions 33b engage with the ribs 28e of the support shaft 28b so as to interpose the rib 28e of the support shaft 28b.

Also, as shown in Fig. 9, the split bush 33 described above is also mounted to the small-diameter portions 28g of the support shafts 28f positioned between the parts 32 in which the two adjacent moving funnels 28 are formed integral with each other. Note that only one split bush 33 positioned between the parts 32 in which the two adjacent moving funnels 28 are formed integral with each other, is mounted so as to bridge the small-diameter portions 28g of the two support shafts 28f.

Also, according to the first embodiment, as shown in Figs. 4 and 6, rubber lips 34 are mounted to ends of the moving funnels 28 toward the stationary funnels 27. Note that, the rubber lip is an example of "elastic member" in the present embodiments. The rubber lips 34 function to fill clearances between the moving funnels 28 and the stationary funnels 27 in the case where the moving funnels 28 are moved to the abutting position (state shown in Fig. 8).

Also, according to the first embodiment, as shown in Figs. 6 and 8, the funnel moving mechanism part 29 is constructed so as to move the moving funnels 28 between the separate position (state shown in Figs. 5 and 6) and the abutting position (state shown in Figs. 7 and 8) with the use of the parallel links 42.

In a concrete construction of the funnel moving mechanism part 29, as shown in Figs. 9 to 11, ends of the rotating shafts 41 made of aluminum are supported in the rotating shaft support holes 27f of the struts 27e provided on the stationary funnels 27 (the parts 30) to be turnable. Also, steps 41 a are provided on one and the other ends of the rotating shafts 41, the steps 41a abutting against opened ends of the rotating shaft support holes 27f of the struts 27e. Therefore, the rotating shafts 41 are inhibited from moving axially.

Also, as shown in Fig. 9, the parallel links 42, respectively, are mounted on one and the other ends of the rotating shafts 41 so as to turn together with the rotating shafts 41. As shown in Figs. 5 to 8, the parallel links 42 comprise an upper link lever 43 made of a resin and mounted to the upper rotating shaft 41 and a lower link lever 44 made of a resin and mounted to the lower rotating shaft 41. Note that the upper link lever 43 and the lower link lever 44 are examples of "link levers" in the present embodiments.

Also, according to the first embodiment, as shown in Fig. 22, the upper rotating shaft 41 in the form of a round rod and two upper link levers 43 are structured so that the upper rotating shaft 41 made of aluminum and the two upper link levers 43 made of a resin are formed integrally. That is, respective rotating shaft insertion holes 43b, described later, of the two upper link levers 43 are mounted to the rotating shaft 41 in the form of a round rod by means of insert molding. Also, the lower rotating shaft 41 and the lower link levers 44 are structured by means of insert molding in the same manner as the upper rotating shaft 41 and the upper link levers 43. Thereby, the respective upper and lower rotating shafts 41, the upper link levers 43, and the lower link levers 44 are arranged downstream of the air flow relative to the air filter 26 as shown in Figs. 3 and 22 and there is no need for removable joint members such as screws, etc. for joining, so that removable joint members such as screws, etc. do not drop in the cleaner box 25 and the engine 14.

As shown in Fig. 22, the upper link lever 43 comprises a fitting portion 43a, a rotating shaft insertion hole 43b, and two stoppers 43c, 43d. As shown in Figs. 5 to 8, the upper support shaft 28b (the small-diameter portion 28c) of the moving funnel 28 is fitted into the fitting portion 43a of the upper link lever 43 with the split bush 33 therebetween. Thereby, the upper link lever 43 is made turnable relative to the upper support shaft 28b. That is, the fitting portion 43a supports the support shaft 28b. That is, as described above, the fitting portion 43a supports the position of center of gravity of the part 32 in which the two moving funnel 28 are made integral. Thereby, the support shafts 28b are inhibited from being twisted by dead loads of the respective moving funnels 28 included in the part 32, so that it becomes possible to smoothly move the moving funnels 28. Also, as shown in Figs. 22 and 23, the fitting portion 43a comprises a split portion 43e extending in an axial direction (C direction) of the support shaft 28b and is structured to be elastically deformable so as to increase a split width of the split portion 43e. Note that the split portion 43e is an example of "second split" in the present embodiments. With the fitting portion 43a structured in the manner described above, the split portion 43e of the fitting portion 43a is pushed against the split bush 33 (the support shaft 28b) in an F direction whereby there comes out a state that the split bush 33 (the support shaft 28b) is interposed by the split portion 43e of the fitting portion 43a. By pushing the fitting portion 43a further in the F direction from the state shown in Fig. 24, it becomes possible to fit the fitting portion 43a into the split bush 33 (the support shaft 28b) as shown in Fig. 22.

Also, as shown in Figs. 5 to 8, the upper rotating shaft 41 is inserted into the rotating shaft insertion hole 43b of the upper link lever 43 so that the upper link lever 43 turns together with the upper rotating shaft 41. Also, as shown in Fig. 6, the stopper 43c on the upper link lever 43 functions to abut against the strut 27e of the stationary funnel 27 to inhibit turning of the upper link lever 43 in a G direction in the case where the upper link lever 43 turns a predetermined amount in the G direction. Also, as shown in Fig. 8, the stopper 43d on the upper link lever 43 functions to abut against the strut 27e of the stationary funnel 27 to inhibit turning of the upper link lever 43 in an H direction in the case where the upper link lever 43 turns a predetermined amount in the H direction. Note that the stoppers 43c, 43d, respectively, are examples of "first stopper" and "second stopper" in the invention.

Also, as shown in Fig. 9, the upper link lever 43 supporting one of the moving funnels 28 (the parts 32) is provided with a support 43f which is supported by a moving member 49 described later. As shown in Figs. 9 and 22, the support 43f comprises a pair of interposing pieces 43h, respectively, formed with a notch 43g, and is arranged on an opposite side to the fitting portion 43a. In addition, as shown in Fig. 9, the upper link lever 43 supporting the other of the moving funnels 28 (the parts 32) is not provided with such support 43f.

Also, as shown in Figs. 6 and 8, the lower link lever 44 comprises a fitting portion 44a and a rotating shaft insertion hole 44b. The lower support shaft 28b (the small-diameter portion 28c) of the moving funnel 28 is fitted into the fitting portion 44a of the lower link lever 44 with the split bush 33 therebetween. Thereby, the lower link lever 44 is made turnable relative to the lower support shaft 28b. Also, the fitting portion 44a comprises a split portion 44c extending in the axial direction of the support shaft 28b and is structured to be elastically deformable so as to increase a split width of the split portion 44c. The split portion 44c has the same function as that of the split portion 43e of the upper link lever 43. Note that the split portion 44c is an example of "second split" in the embodiments. Also, the lower rotating shaft 41 is inserted into the rotating shaft insertion hole 44b of the lower link lever 44 so that the lower link lever 44 turns together with the lower rotating shaft 41. In addition, as shown in Fig. 9, a link lever 44d including a fitting portion 44a, a rotating shaft insertion hole 44b, and a split portion 44c, which are the same as those of the lower link lever 44, is arranged between the parts 32 in which the two adjacent moving funnels 28 are formed integral with each other.

With the parallel links 42 structured in the manner described above, the moving funnels 28 are moved in a direction away from the stationary funnels 27 in the case where the parallel links 42 are turned in the G direction as shown in Fig. 6. Also, as shown in Fig. 8, the moving funnels 28 are moved in a direction toward the stationary funnels 27 in the case where the parallel links 42 are turned in the H direction. Here, as shown in Figs. 6 and 8, turning amounts of the parallel links 42 are adjusted so that opened surfaces of the moving funnels 28 toward the openings 27a of the stationary funnels 27 in the separate position (state shown in Fig. 6) and opened surfaces of the moving funnels 28 toward the openings 27a of the stationary funnels 27 in the abutting position (state shown in Fig. 8) are positioned in the same manner as viewed in a direction in which the stationary funnels 27 are opened. Also, turning amounts of the parallel links 42 are adjusted so that a position of the upper support shaft 28b in the separate position (state shown in Fig. 6) as viewed in a direction in which the stationary funnels 27 are opened, and a position of the upper support shaft 28b in the abutting position (state shown in Fig. 8) as viewed in a direction in which the stationary funnels 27 are opened, become the same and a position of the lower support shaft 28b in the separate position (state shown in Fig. 6) as viewed in a direction in which the stationary funnels 27 are opened, and a position of the lower support shaft 28b in the abutting position (state shown in Fig. 8) as viewed in a direction in which the stationary funnels 27 are opened, become the same. Further, turning amounts of the parallel links 42 are adjusted so that a position of the upper support shaft 28b in the separate position (state shown in Fig. 6) as viewed in a direction in which the stationary funnels 27 are opened, and a position of the lower support shaft 28b in the abutting position (state shown in Fig. 8) as viewed in a direction in which the stationary funnels 27 are opened, become the same and a position of the upper support shaft 28b in the abutting position (state shown in Fig. 8) as viewed in a direction in which the stationary funnels 27 are opened, and a position of the lower support shaft 28b in the abutting position (state shown in Fig. 8) as viewed in a direction in which the stationary funnels 27 are opened, become the same.

Also, as shown in Fig. 6, the stopper 43c on the parallel link 42 (the upper link lever 43) is adjusted so as to abut against the strut 27e in the case where the moving funnels 28 reach the separate position. Also, as shown in Fig. 8, the stopper 43d on the parallel link 42 (the upper link lever 43) is adjusted so as to abut against the strut 27e in the case where the moving funnels 28 reach the abutting position.

Also, as shown in Figs. 6, 9, and 25, the parallel links 42 including the upper link lever 43 and the lower link lever 44 are structured so as to be turned by a drive force of a motor 45. Specifically, one end of a turning lever 46 is mounted to an output shaft 45a of the motor 45. A substantially spherical-shaped support portion 46a is provided on the other end of the turning lever 46. A connecting member 47 is mounted to the spherical-shaped support portion 46a of the turning lever 46 to be swingable relative to the support portion 46a, and a moving shaft 48 is mounted to the connecting member 47. As shown in Fig. 26, the moving shaft 48 is provided with an upper push portion 48a and a lower push portion 48b. The upper push portion 48a is arranged at an opposite end of the moving shaft 48 to the connecting member 47 (see Fig. 25) and the lower push portion 48b is arranged in a region of the moving shaft 48 at a predetermined interval in a downward direction from the upper push portion 48a.

Also, the moving member 49 is arranged on one end side of the moving shaft 48 on which the upper push portion 48a (the lower push portion 48b) is provided. As shown in Fig. 25, projections 49a are provided on both side surfaces of the moving member 49 to engage with the pair of notches 43g formed on the upper link lever 43. The interposing pieces 43h of the upper link lever 43 are arranged so as to interpose therebetween the moving member 49 and the notches 43g are caused to engage with the projections 49a whereby the upper link lever 43 (the support 43f) is supported by the moving member 49. Also, as shown in Fig. 26, bushes 50a, 50b are provided in the inside of the moving member 49 to support the moving shaft 48 slidably. The bushes 50a, 50b are arranged between the upper push portion 48a and the lower push portion 48b. A compression spring 51 is mounted between the bushes 50a, 50b within the moving member 49. Note that the compression spring 51 is an example of "bias member" in the present embodiments.

In the case where a drive force of the motor 45 turns the turning lever 46 in an I direction (state shown in Fig. 25), the moving shaft 48 is moved in a J direction as shown in Fig. 26 to cause the compression spring 51 to generate a biasing force in the J direction, so that the moving member 49 is biased by the compression spring 51 in the J direction. Therefore, since the biasing force of the compression spring 51 (see Fig. 26) is transmitted to the parallel links 42 through the moving member 49 as shown in Fig. 6, the parallel links 42 are turned in the G direction. Also in a state that the stoppers 43c on the parallel links 42 abut against the struts 27e, the biasing force of the compression spring 51 (see Fig. 26) is transmitted to the parallel links 42 through the moving member 49 so that the parallel links 42 are turned in the G direction.

On the other hand, in the case where the drive force of the motor 45 turns the turning lever 46 in a K direction (state shown in Fig. 27), the moving shaft 48 is moved in an L direction as shown in Fig. 28 to cause the compression spring 51 to generate a biasing force in the L direction, so that the moving member 49 is biased by the compression spring 51 in the L direction. Therefore, since the biasing force of the compression spring 51 (see Fig. 28) is transmitted to the parallel links 42 through the moving member 49 as shown in Fig. 8, the parallel links 42 are turned in the H direction. Also in a state that the stoppers 43d on the parallel links 42 abut against the struts 27e, the biasing force of the compression spring 51 (see Fig. 28) is transmitted to the parallel links 42 through the moving member 49 so that the parallel links 42 are turned in the H direction.

Next, an operation when the intake pipes connected to the cylinders 16 from the cleaner box 25 are switched in length will be described with reference to Figs. 3, 6, 8 and 25 to 28.

In the case where the engine 14 shown in Fig. 3 rotates at high speed, the intake pipes are made short in order to make it easy to obtain a pulsation effect. That is, in the case where the engine 14 rotates at high speed, the moving funnels 28 are moved to the separate position.

Specifically, the motor 45 of the funnel moving mechanism part 29 turns the turning lever 46 in the I direction as shown in Fig. 25 whereby the moving shaft 48 is moved in the J direction. Thereby, a biasing force in the J direction is generated on the compression spring 51 (see Fig. 26) as shown in Fig. 6 whereby the moving shaft 48 is moved in the J direction, so that the parallel links 42 are turned in the G direction. Thereafter, turning of the parallel links 42 in the G direction continues until the stoppers 43c on the upper link lever 43 abut against the struts 27e.

Thereby, the moving funnels 28 are moved to the separate position in a state that opened surfaces of the openings 28a of the moving funnels 28 are maintained in parallel to opened surfaces of the openings 27a of the stationary funnels 27. Consequently, in the case where the engine 14 (see Fig. 3) rotates at high speed, the stationary funnels 27, the throttle body 18 (see Fig. 3), and the intake ports 17a (see Fig. 3) constitute intake pipes, so that the intake pipes are made short. Here, in the case where the intake pipes are made short when the engine 14 shown in Fig. 3 rotates at high speed, high pressure waves become liable to reach the openings of the intake ports 17a toward the cylinders 16 when the intake valves 19a are opened, so that an improvement in intake efficiency is achieved.

In addition, as shown in Fig. 6, in a state that the moving funnels 28 reach the separate position, the positions of the opened surfaces of the moving funnels 28 toward the openings 27a of the stationary funnels 27 are the same as these of the opened surfaces of the moving funnels 28 toward the openings 27a of the stationary funnels 27 in the abutting position (state shown in Fig. 8) as viewed in a direction in which the stationary funnels 27 are opened. Also, in a state that the moving funnels 28 reach the separate position, the biasing force of the compression spring 51 (see Fig. 26) is transmitted to the parallel links 42 through the moving member 49 so that the parallel links 42 are turned in the G direction.

Next, in the case where the engine 14 shown in Fig. 3 rotates at low speed, the intake pipes are made long in order to make it easy to obtain a pulsation effect. That is, in the case where the engine 14 rotates at low speed, the moving funnels 28 are moved to the abutting position.

Specifically, as shown in Fig. 27, the motor 45 of the funnel moving mechanism part 29 first turns the turning lever 46 in the K direction whereby the moving shaft 48 is moved in the L direction. Thereby, a biasing force in the L direction is generated on the compression spring 51 (see Fig. 28) as shown in Fig. 8 whereby the moving member 49 is moved in the L direction, so that the parallel links 42 are turned in the H direction. Thereafter, turning of the parallel links 42 in the H direction continues until the stoppers 43d on the upper link lever 43 abut against the struts 27e.

Thereby, the moving funnels 28 are moved to the abutting position while the opened surfaces of the openings 28a of the moving funnels 28 are maintained in parallel to the opened surfaces of the openings 27a of the stationary funnels 27. Consequently, in the case where the engine 14 (see Fig. 3) rotates at low speed, the moving funnels 28, the stationary funnels 27, the throttle body 18 (see Fig. 3), and the intake ports 17a (see Fig. 3) constitute intake pipes, so that the intake pipes are made long. Here, in the case where the intake pipes are made long when the engine 14 shown in Fig. 3 rotates at low speed, high pressure waves become liable to reach the openings of the intake ports 17a toward the cylinders 16 when the intake valves 19a are opened, so that an improvement in intake efficiency is achieved.

In addition, in a state that the moving funnels 28 reach the abutting position as shown in Fig. 8, the biasing force of the compression spring 51 (see Fig. 28) is transmitted to the parallel links 42 through the moving member 49 so that the parallel links 42 are turned in the H direction.

According to the first embodiment, as described above, the parallel links 42 including the upper link lever 43 and the lower link lever 44, which support the moving funnels 28 movably, are provided and the moving funnels 28 are moved by the use of the parallel links 42 whereby the openings 28a of the moving funnels 28 can be separated from and abut against the openings 27a of the stationary funnels 27 while the opened surfaces of the openings 28a of the moving funnels 28 are maintained in parallel to the opened surfaces of the openings 27a of the stationary funnels 27. Thereby, even when the openings 28a of the moving funnels 28 are separated from the openings 27a of the stationary funnels 27 in the case where the engine 14 rotates at high speed, the air passing through the moving funnels 28 to be sucked by the stationary funnels 27 can be caused to flow linearly, so that it is possible to inhibit the air from being increased in flow resistance. Consequently, in the case where the engine 14 rotates at high speed (in the case where the moving funnels 28 are caused to separate from the stationary funnels 27), it is possible to inhibit a decrease in intake efficiency.

Also, according to the first embodiment, as described above, turning amounts of the parallel links 42 are adjusted so that the opened surfaces of the moving funnels 28 toward the openings 27a of the stationary funnels 27 in the separate position and the opened surfaces of the moving funnels 28 toward the openings 27a of the stationary funnels 27 in the abutting position are positioned in the same manner as viewed in a direction in which the stationary funnels 27 are opened, whereby in the case where the moving funnels 28 are moved to the separate position from the abutting position (in the case where the engine 14 rotates at high speed), substantially the whole air passing through the moving funnels 28 to be sucked by the stationary funnels 27 can be caused to flow linearly, so that it is possible to further inhibit the air from being increased in flow resistance.

Also, according to the first embodiment, as described above, the support shafts 28b are provided integral with the moving funnels 28 whereby there is no need of subsequently mounting the support shafts 28b to the moving funnels 28 by screws, so that it is possible to inhibit parts such as screws, etc. from coming off to give rise to a failure. Also, since the moving funnels 28 and the support shafts 28b can be made one part, it is possible to reduce the number of parts.

Also, according to the first embodiment, as described above, two moving funnels 28 can be supported movably by the same parallel links 42 by forming the two moving funnels 28 integrally through the support shafts 28b which are arranged between two adjacent moving funnels 28, and fitting the parallel links 42 onto the support shafts 28b arranged between the two adjacent moving funnels 28. Thereby, the parallel links 42 can be reduced in number as compared with the case where a parallel link 42 is provided on each moving funnel 28. Also, since two moving funnels 28 can be made one part, it is possible to reduce the number of parts.

Also, according to the first embodiment, as described above, the split bush 33 mounted to the support shaft 28b is structured to include the split 33a extending axially of the support shaft 28b and to be elastically deformable so that a split width of the split 33a is increased, whereby the split bush 33 can be mounted to the support shaft 28b through the split 33a radially of the support shaft 28b by elastically deforming the split bush 33 so that a split width of the split 33a is increased, even when it becomes difficult to mount the split bush 33 axially of the support shaft 28b due to integral formation of the support shaft 28b between two moving funnels 28.

Also, according to the first embodiment, as described above, the ribs 28d, 28e for engagement with the split 33a of the split bush 33 are provided on the support shaft 28b whereby the ribs 28d, 28e of the support shaft 28b and the split 33a of the split bush 33 engage with each other when the split bush 33 is to be mounted to the support shaft 28b, so that it is possible to inhibit the split bush 33 from rotating relative to the support shaft 28b. Thereby, the split bush 33 can be readily mounted to the support shaft 28b.

Also, according to the first embodiment, as described above, the split 33a positioned on the flange portion 33b of the split bush 33 is formed so as to be increased in split width in a direction in which the flange portion 33b projects, whereby the split 33a can be readily and elastically deformed so that a split width of the split 33a is increased, by pushing the split bush 33 radially of the support shaft 28b in a state that the flange portion 33b of the split bush 33 is caused to abut against the support shaft 28b.

Also, according to the first embodiment, as described above, the rib 28e of the support shaft 28b is formed on the end of the small-diameter portion 28c so as to extend radially of the support shaft 28b whereby it is possible to engage the rib 28e of the support shaft 28b with the split 33a positioned on the flange portion 33b of the split bush 33, so that it is possible to further inhibit the split bush 33 from rotating relative to the support shaft 28b.

Also, according to the first embodiment, as described above, the fitting portion 43a of the upper link lever 43 is structured to include the split portion 43e extending axially of the support shaft 28b and to be elastically deformable so as to increase a split width of the split portion 43e whereby the fitting portion 43a can be fitted onto the support shaft 28b through the split portion 43e radially of the support shaft 28b by elastically deforming the fitting portion 43a so that a split width of the split portion 43e is increased, even when it becomes difficult to fit the fitting portion 43a of the upper link lever 43 axially of the support shaft 28b due to integral formation of the support shaft 28b between two adjacent moving funnels 28. In addition, the same effect as that of the upper link lever 43 can be obtained for the lower link lever 44.

Also, according to the first embodiment, as described above, the stationary funnels 27 are fixed to the cleaner box 25 and the struts 27e provided integrally on the stationary funnels 27 support ends of the rotating shafts 41 so as not to move the rotating shafts 41 axially whereby it is possible to inhibit the ends of the rotating shafts 41 from coming off the rotating shaft support holes 27f of the struts 27e in a state that the stationary funnels 27 are fixed to the cleaner box 25, due to axial movements of the rotating shafts 41 supported by the struts 27e. Thereby, since the rotating shafts 41 are kept inserted into the rotating shaft insertion hole 43b of the upper link lever 43 while the stationary funnels 27 are fixed to the cleaner box 25, it is possible to inhibit the upper link lever 43 from coming off the ends of the rotating shafts 41. In addition, the same effect as that of the upper link lever 43 can be obtained for the lower link lever 44.

Also, according to the first embodiment, as described above, the steps 41 a adapted to abut against the opened ends of the rotating shaft support holes 27f of the struts 27e are provided on one and the other ends of the rotating shafts 41 whereby it is possible to readily inhibit the rotating shafts 41, which are supported by the struts 27e, from moving axially of the rotating shafts 41.

Also, according to the first embodiment, as described above, the upper link lever 43 is provided with the stopper 43c which abuts against the strut 27e to inhibit turning of the upper link lever 43 in the G direction in the case where the upper link lever 43 turns in the G direction to thereby cause the moving funnels 28 to reach the separate position, and the stopper 43d which abuts against the strut 27e to inhibit turning of the upper link lever 43 in the H direction in the case where the upper link lever 43 turns in the H direction to thereby cause the moving funnels 28 to move to the abutting position, whereby it is possible to inhibit generation of an inconvenience that the moving funnels 28 are moved to a position shifted from the separate position in the case where the moving funnels 28 are to be moved to the separate position, due to excessive turning amounts of the upper link lever 43 in the G direction. Also, it is possible to inhibit generation of an inconvenience that the moving funnels 28 are moved to a position shifted from the abutting position in the case where the moving funnels 28 are to be moved to the abutting position, due to excessive turning amounts of the upper link lever 43 in the H direction.

Also, according to the first embodiment, as described above, the stoppers 43c, 43d of the upper link lever 43 are caused to abut against the strut 27e provided integrally on the stationary funnels 27 to restrict turning of the upper link lever 43 whereby there is no need of separately providing abutment members, which abut against the stoppers 43c, 43d, so that it is possible to reduce the number of parts.

Also, according to the first embodiment, as described above, in the case where the upper link lever 43 turns in the G direction to cause the stopper 43c to abut against the strut 27e, the biasing force of the compression spring 51 continues to be transmitted to the upper link lever 43 through the moving member 49 so that the upper link lever 43 is turned in the G direction, and in the case where the upper link lever 43 turns in the H direction to cause the stopper 43d to abut against the strut 27e, the biasing force of the compression spring 51 continues to be transmitted to the upper link lever 43 through the moving member 49 so that the upper link lever 43 is turned in the H direction, whereby the stopper 43c on the upper link lever 43 is kept abutted against the strut 27e by the biasing force of the compression spring 51 in the case where the upper link lever 43 turns in the G direction to cause the stopper 43c to abut against the strut 27e (in the case where the moving funnels 28 reach the separate position). Thereby, it is possible to inhibit the moving funnels 28 from being moved to a position shifted from the abutting position in the case where the moving funnels 28 are to be held in the separate position. Also, in the case where the upper link lever 43 turns in the H direction to cause the stopper 43d to abut against the strut 27e (in the case where the moving funnels 28 reach the abutting position), the stopper 43d on the upper link lever 43 is kept abutted against the strut 27e by the biasing force of the compression spring 51. Thereby, it is possible to inhibit the moving funnels 28 from being moved to a position shifted from the abutting position in the case where the moving funnels 28 are to be held in the abutting position.

Also, according to the first embodiment, as described above, the engagement portion 27d is provided on the inner surface of the screw insertion hole 27c of the stationary funnel 27 to engage with the head 31 a of the screw 31 whereby engagement of the head 31a of the screw 31 with the engagement portion 27d makes it possible to inhibit the screw 31 from coming off the screw insertion hole 27c even when the stationary funnels 27 are carried in a state that the screw 31 is inserted into the screw insertion hole 27c. Also, the engagement portion 27d of the screw insertion hole 27c is structured to be elastically deformable toward an outside of the screw insertion hole 27c from an inside thereof whereby in mounting the stationary funnels 27 to the engine 14, engagement of the head 31 a of the screw 31 with the engagement portion 27d can be released by elastically deforming the engagement portion 27d of the screw insertion hole 27c.

Thereby, it is possible to readily mount the stationary funnels 27 to the engine 14 by means of the screw 31 inserted into the screw insertion hole 27c.

Also, according to the first embodiment, as described above, the rubber lips 34 are mounted to the ends of the moving funnels 28 toward the stationary funnels 27 whereby the rubber lips 34 can fill clearances between the moving funnels 28 and the stationary funnels 27 in the case where the moving funnels 28 are moved to the abutting position (state shown in Fig. 8). Thereby, it is possible to inhibit the air from leaking between the moving funnels 28 and the stationary funnels 27.

Also, according to the first embodiment, as described above, the respective upper and lower rotating shafts 41 made of a metal, the upper link levers 43, and the lower link levers 44, both of which are made of a resin, respectively, are formed integrally, whereby the rotating shafts 41 made of a metal enable readily ensuring stiffness for the respective upper and lower rotating shafts 41, and the upper link levers 43 and the lower link levers 44, both of which are made of a resin, enable readily and elastically deforming the upper link levers 43 and the lower link levers 44.

### Second Embodiment

Figs. 29 to 33 are views illustrating details of the construction of a parallel link of a motorcycle according to a second embodiment. Referring to Figs. 29 to 33, the second embodiment will be described with a case, different from the first embodiment, in which a single flat surface portion 61 c is provided on a joint 61 b of a rotating shaft 61 to which an upper link lever 63 and a lower link lever 64 are mounted.

According to the second embodiment, as shown in Figs. 29 and 31, the upper rotating shaft 61 and two upper link levers 63 are structured so that the upper rotating shaft 61 made of aluminum and two upper link levers 63 made of a resin are formed integrally. That is, respective rotating shaft insertion holes 63b of the two upper link levers 63 are mounted to the respective joint 61 b of the rotating shaft 61 by means of insert molding in the same manner as in the first embodiment. Also, as shown in Figs. 30 and 32, the lower rotating shaft 61 and the lower link levers 64 are also formed by means of insert molding in the same manner as the upper rotating shaft 61 and the upper link levers 63. Note that the upper link levers 63 and the lower link levers 64 are examples of "link lever" in the present embodiments.

Also, according to the second embodiment, as shown in Figs. 29 to 33, outer peripheral surface portions of the respective upper and lower rotating shafts 61 are cut to form flat surface portions 61 c on the respective joints 61 b in which the rotating shaft insertion holes 63b of the upper link levers 63 and the rotating shaft insertion holes 64b of the lower link levers 64, respectively, are mounted to the respective upper and lower rotating shafts 61. Thereby, it becomes possible to readily inhibit the upper link levers 63 and the lower link levers 64 from idling relative to the respective joints 61 b on the respective upper and lower rotating shafts 61.

In addition, the remaining construction and operation of the second embodiment are the same as those of the first embodiment.

According to the second embodiment, as described above, the flat surface portions 61 c are provided on the joints 61 b of the rotating shafts 61 in the form of round shafts so as to prevent rotation of the upper link lever 63 and the lower link lever 64, both of which are made of a resin, whereby it is possible to inhibit the upper link lever 63 and the lower link lever 64 from idling relative to the rotating shafts 61, so that it is possible to inhibit generation of dispersion in movements of the moving funnels 28 due to rotation of the upper link lever 63 and the lower link lever 64 relative to the rotating shafts 61.

In addition, the remaining effects of the second embodiment are the same as those of the first embodiment.

It should be understood that the embodiment disclosed herein be exemplary in all respects and not limitative.

While the embodiments are described with an example of an application of the present teaching to a motorcycle, the present teaching is not limited thereto but applicable to other vehicles than motorcycles.

Also, while the present teaching is applied to a vehicle mounting thereon a four-cylinder engine according to the embodiment, the teaching is not limited thereto but applicable to a vehicle mounting thereon a multi-cylinder engine other a four-cylinder engine and a vehicle mounting thereon a single cylinder engine.

Also, while two moving funnels are made integrally according to the embodiments, the teaching is not limited thereto but three or more moving funnels may be made integrally. Also, separate moving funnels may be arranged on every cylinder.

Also, while the second embodiment illustrates an example in which a single flat surface portion is provided on the rotating shaft, the present teaching is not limited thereto but a plurality of flat surface portions may be provided on the rotating shaft.

Also, while according to the second embodiment the respective joints 61 b of the upper and lower rotating shafts 61, to which the rotating shaft insertion holes 63b of the upper link levers 63 and the rotating shaft insertion holes 64b of the lower link levers 64 are mounted, are structured to include the flat surface portions 61 c, the teaching is not limited thereto but a plurality of irregular portions 71 c provided in an outer circumferential direction of a rotating shaft 71 by means of knurling may be included in joint portions 71 b like the rotating shaft 71 according to a modification of the second embodiment. The plurality of irregular portions 71 c enable readily inhibiting an upper link lever 73 and a lower link lever (not shown) from idling relative to the rotating shaft 71.

The above description discloses an embodiment of an air introducing system with a movable funnel and a fixed funnel with one injector 20 mounted to a throttle body 18 to jet fuel into the intake port 17a. In addition to this injector 20, there might also be provided an additional second injector arranged in the intake box and injecting fuel directly into the opening of the moving funnel 28. Such fuel injection system with two injectors would provide an additional possibility to vary the output of the engine and to adjust the output of the engine to the respective driving conditions.

The description above discloses (amongst others) in order to attain the object, an embodiment of a vehicle which comprises a stationary funnel through which the air is led to an intake port of an engine, a moving funnel arranged movably on an intake side of the stationary funnel and cooperating with the stationary funnel to have the air led to the intake port of the engine, and a parallel link mounted in a predetermined location to be turnable and including a plurality of link levers, which movably support the moving funnel.

With the vehicle in this embodiment, as described above, the parallel link including the plurality of link levers, which movably support the moving funnel is provided whereby the parallel link is used to move the moving funnel to enable an opening of the moving funnel toward the stationary funnel to separate from and abut against an opening of the stationary funnel on an intake side while an opened surface of the moving funnel toward the stationary funnel is maintained in parallel to an opened surface of the stationary funnel on an intake side. Thereby, even when the opening of the moving funnel toward the stationary funnel is caused to separate from the opening of the stationary funnel on the intake side, the air passing through the moving funnel to be sucked by the stationary funnel can be caused to flow linearly, so that it is possible to inhibit the air from being increased in flow resistance. Consequently, in the case where the moving funnel is caused to separate from the stationary funnel, it is possible to inhibit a decrease in intake efficiency.

In the vehicle in this embodiment, preferably, in the case where the engine rotates at high speed, the link levers tum in a first direction whereby an opening of the moving funnel toward the stationary funnel is moved to a first position separate from an opening of the stationary funnel on an intake side, and in the case where the engine rotates at low speed, the link levers tum in a second direction in opposition to the first direction whereby the opening of the moving funnel toward the stationary funnel is moved to a second position to abut against the opening of the stationary funnel on the intake side.

With such construction, in the case where a rotational speed of the engine is varied from low speed to high speed, it is possible to move the moving funnel to the first position from the second position while an opened surface of the moving funnel toward the stationary funnel is maintained in parallel to an opened surface of the stationary funnel on an intake side. Thereby, in the case where the engine rotates at high speed, the air passing through the moving funnel to be sucked by the stationary funnel can be caused to flow linearly, so that it is possible to inhibit the air from being increased in flow resistance. Consequently, in the case where the engine rotates at high speed, it is possible to inhibit a decrease in intake efficiency.

In this case, preferably, turning amounts of the link levers are adjusted so that an opened surface of the moving funnel on the intake side of the stationary funnel in the first position and an opened surface of the moving funnel on the intake side of the stationary funnel in the second position are positioned in the same manner as viewed in a direction in which the stationary funnel is opened. With such construction, in the case where the moving funnel is moved to the first position from the second position (in the case where the engine rotates at high speed), substantially the whole air passing through the moving funnel to be sucked by the stationary funnel can be caused to flow linearly, so that it is possible to further inhibit the air from being increased in flow resistance.

In the above-described construction that turning amounts of the link levers are adjusted, preferably, the moving funnel comprises an upper support shaft and a lower support shaft, the stationary funnel comprises an upper rotating shaft and a lower rotating shaft, the upper support shaft and the upper rotating shaft are connected to each other through an upper link lever, the lower support shaft and the lower rotating shaft are connected to each other through a lower link lever, a position of the upper support shaft in the first position, as viewed in a direction in which the stationary funnel is opened, and a position of the upper support shaft in the second position, as viewed in a direction in which the stationary funnel is opened, are the same, and a position of the lower support shaft in the first position, as viewed in a direction in which the stationary funnel is opened, and a position of the lower support shaft in the second position, as viewed in a direction in which the stationary funnel is opened, are the same. With such construction, in the case where the upper support shaft of the moving funnel and the upper rotating shaft of the stationary funnel are connected to each other through the upper link lever and the lower support shaft of the moving funnel and the lower rotating shaft of the stationary funnel are connected to each other through the lower link lever, turning amounts of the upper link lever and the lower link lever are adjusted whereby an opened surface of the moving funnel on the intake side of the stationary funnel in the first position and an opened surface of the moving funnel on the intake side of the stationary funnel in the second position can be positioned in the same manner as viewed in a direction in which the stationary funnel is opened.

In this case, preferably, a position of the upper support shaft in the first position, as viewed in a direction in which the stationary funnel is opened, and a position of the lower support shaft in the first position, as viewed in a direction in which the stationary funnel is opened, are the same, and a position of the upper support shaft in the second position, as viewed in a direction in which the stationary funnel is opened, and a position of the lower support shaft in the second position, as viewed in a direction in which the stationary funnel is opened, are the same. With such construction, turning amounts of the upper link lever and the lower link lever are adjusted whereby an opened surface of the moving funnel on the intake side of the stationary funnel in the first position and an opened surface of the moving funnel on the intake side of the stationary funnel in the second position can be readily positioned in the same manner as viewed in a direction in which the stationary funnel is opened.

In the vehicle in this embodiment, preferably, a support shaft supported by the link levers is provided integrally on the moving funnel and the link levers comprise a fitting portion fitted onto the support shaft to be turnable. With such construction, there is no need of subsequently mounting the support shaft to the moving funnel by screws or the like, so that it is possible to inhibit parts such as screws, etc. from coming off to give rise to a failure. Also, since the moving funnel and the support shaft can be made one part by providing the support shaft integrally on the moving funnel, it is possible to reduce the number of parts.

In this case, preferably, the engine comprises an engine having a plurality of cylinders, the stationary funnel and the moving funnel are respectively provided on every cylinder of the engine, and the adjacent moving funnels are formed integral with each other through the support shaft which connects between the adjacent moving funnels. With such construction, by fitting the fitting portion of the link lever onto the support shaft for connection between adjacent moving funnels, a plurality of moving funnels can be supported movably by the same link lever. Thereby, the link levers can be reduced in number as compared with the case where a link lever is provided on every each moving funnel. Also, since a plurality of moving funnels can be made one part by forming adjacent moving funnels integrally through the support shaft for connection between the adjacent moving funnels, it is possible to reduce the number of parts.

In the construction in which the plurality of moving funnels are formed integrally through the support shaft which connects between the adjacent moving funnels, preferably, there is further provided a bush mounted to the support shaft to permit the link levers to turn relative to the support shaft, and the bush is structured to comprise a first split extending axially of the support shaft and to be elastically deformable so that a split width of the first split is increased. With such construction, even when it becomes difficult to mount the bush axially of the support shaft due to integral formation of the support shaft between the adjacent moving funnels, the bush can be fitted onto the support shaft through the first split radially of the support shaft by elastically deforming the bush so that a split width of the first split is increased.

In the construction in which the bush comprises the first split, preferably, there is further provided a rib provided on the support shaft to engage with the first split of the bush. With such construction, the rib of the support shaft and the first split of the bush engage with each other when the bush is to be mounted to the support shaft, whereby it is possible to inhibit the bush from rotating relative to the support shaft. Thereby, the bush can be readily mounted to the support shaft.

In the construction in which the bush comprising the first split is further provided, preferably, a flange portion is provided on an end of the bush to project radially of the support shaft and formed integral with the first split, and the first split positioned on the flange portion of the bush is formed so that a split width is gradually increased in a direction in which the flange portion projects. With such construction, the bush can be readily and elastically deformed so that a split width of the first split is increased by pushing the bush radially of the support shaft while the flange portion of the bush is caused to abut against the support shaft.

In the construction in which the flange portion is provided on the end of the bush, preferably, the support shaft comprises a small-diameter portion to which the bush is mounted, the rib of the support shaft comprises a first rib and a second rib, the first rib of the support shaft is formed on an outer surface of the small-diameter portion to extend axially of the support shaft, and the second rib of the support shaft is formed on an end of the small-diameter portion to extend radially of the support shaft. With such construction, since the second rib of the support shaft 28b can be caused to engage with the first split positioned on the flange portion of the bush, it is possible to further inhibit the bush from rotating relative to the support shaft.

In the construction in which the plurality of moving funnels are formed integrally through the support shaft which connects between the adjacent moving funnels, preferably, the fitting portions of the link levers are structured to comprise a second split extending axially of the support shaft and to be elastically deformable so that a split width of the second split is increased. With such construction, even when it becomes difficult to mount the fitting portion of the link lever axially of the support shaft due to integral formation of the support shaft between the adjacent moving funnels, the fitting portion can be fitted onto the support shaft through the second split radially of the support shaft by elastically deforming the fitting portion so that a split width of the second split of the fitting portion of the link lever is increased.

In the vehicle in this embodiment, preferably, there is further provided a rotating shaft to turn the link levers, the link levers are provided with a rotating shaft support hole into which the rotating shaft is inserted, so that the link levers turn together with the rotating shaft, and a strut is provided integrally on the stationary funnel to support an end of the rotating shaft rotatably so that the rotating shaft is not moved axially. With such construction, it is possible to inhibit generation of an inconvenience that the end of the rotating shaft comes off the rotating shaft support hole of the strut while the stationary funnel is fixed to a predetermined member, due to movements of the rotating shaft supported by the strut in an axial direction of the rotating shaft. Thereby, since the rotating shaft is kept inserted into the rotating shaft insertion hole of the link lever in a state that the stationary funnel is fixed to the predetermined member, it is possible to inhibit the link lever from coming off the end of the rotating shaft.

In this case, preferably, the rotating shaft comprises a step to abut against an opened end of the rotating shaft support hole on the strut. With such construction, the step on the rotating shaft abuts against the opened end of the rotating shaft support hole of the strut whereby it is possible to readily inhibit the rotating shaft, which is supported by the strut, from moving axially of the rotating shaft.

In the construction in which the moving funnel is moved in the first direction and in the second direction, preferably, the link levers comprise a first stopper to abut against an abutment member to restrict turning of the link levers in the first direction in the case where the link levers turn in the first direction to have the moving funnel reached the first position, and a second stopper to abut against the abutment member to restrict turning of the link levers in the second direction in the case where the link levers turn in the second direction to have the moving funnel reached the second position. With such construction, in the case where the moving funnel is to be moved to the first position, it is possible to inhibit generation of an inconvenience that the moving funnel is moved to a position shifted from the first position, due to an excessive turning amount of the link lever in the first direction. Also, it is possible to inhibit generation of an inconvenience that the moving funnel is moved to a position shifted from the second position in the case where the moving funnel is to be moved to the second position, due to an excessive turning amount of the link lever in the second direction.

In the construction in which the link levers comprise the first stopper and the second stopper, preferably, there are further provided a moving member to support and move the link levers, and a bias member to bias the moving member, a biasing force of the bias member is transmitted to the link levers through the moving member whereby the link levers are turned, in the case where turning of the link levers in the first direction causes the first stopper to abut against the abutment member, a biasing force of the bias member is transmitted to the link levers through the moving member so that the link levers turn in the first direction, and in the case where turning of the link levers in the second direction causes the second stopper to abut against the abutment member, a biasing force of the bias member is transmitted to the link levers through the moving member so that the link levers turn in the second direction. With such construction, in the case where the link lever turns in the first direction to cause the first stopper to abut against an abutment member (in the case where the moving funnel reaches the first position), a state, in which the first stopper on the link lever abuts against the abutment member, can be held by the biasing force of the bias member. Thereby, it is possible to inhibit the moving funnel from being moved to a position shifted from the first position in the case where the moving funnel is to be held in the first position. Also, in the case where the link lever turns in the second direction to cause the second stopper to abut against the abutment member (in the case where the moving funnel reaches the second position), the second stopper on the link lever is kept abutted against the abutment member by the biasing force of the bias member. Thereby, it is possible to inhibit the moving funnel from being moved to a position shifted from the second position in the case where the moving funnel is to be held in the second position.

In this case, preferably, the abutment member comprises a strut provided integrally on the stationary funnel. With such construction, parts can be reduced in number as compared with the case where an abutment member is provided separately.

In the vehicle in this embodiment, preferably, the stationary funnel comprises a screw insertion hole into which a screw is inserted, and is mounted to the engine by means of the screw inserted into the screw insertion hole and the screw insertion hole of the stationary funnel is provided on an inner surface thereof with an engagement portion which is structured to engage with a head of the screw and to be elastically deformable toward an outside of the screw insertion hole from an inside thereof. With such construction, engagement of the head of the screw with the engagement portion makes it possible to inhibit the screw from coming off the screw insertion hole even when the stationary funnel is carried in a state that the screw is inserted into the screw insertion hole. Also, the engagement portion of the screw insertion hole is structured to be elastically deformable toward an outside of the screw insertion hole from an inside thereof whereby in mounting the stationary funnel to the engine, engagement of the head of the screw with the engagement portion can be released by elastically deforming the engagement portion of the screw insertion hole. Thereby, it is possible to readily mount the stationary funnel to the engine by means of the screw inserted into the screw insertion hole.

In the vehicle in this embodiment, preferably, there is further provided an elastic member mounted to an end of the moving funnel toward the stationary funnel. With such construction, in the case where the opening of the moving funnel toward the stationary funnel is caused to abut against the opening of the stationary funnel on the intake side, the elastic member mounted to the end of the moving funnel toward the stationary funnel can fill the clearance between the moving funnel and the stationary funnel. Thereby, it is possible to inhibit the air from leaking from between the moving funnel and the stationary funnel.

In the vehicle in this embodiment, preferably, there is further provided a rotating shaft which turns the plurality of link levers, the rotating shaft is made of a metal, the plurality of link levers are made of a resin, and the rotating shaft made of a metal and the plurality of link levers made of a resin are formed integrally. With such construction, the rotating shaft made of a metal enables readily ensuring stiffness for the rotating shaft and the link levers made of a resin enable readily and elastically deforming the link levers.

In this case, preferably, the rotating shaft made of a metal is shaped not to rotate at joints with the plurality of link levers made of a resin. With such construction, it is possible to inhibit the link levers from idling relative to the rotating shaft, so that it is possible to inhibit generation of dispersion in movements of the moving funnel due to rotation of the link levers relative to the rotating shaft.

In the vehicle in which the rotating shaft is structured not to rotate at joints with the link levers, preferably, the rotating shaft is shaped in the form of a round rod and the joint at which the rotating shaft in the form of a round rod joins the link lever includes a flat surface portion. With such construction, the flat surface portion enables readily inhibiting the link levers from idling relative to the rotating shaft.

In the vehicle in which the rotating shaft is structured not to rotate at joints with the link levers, preferably, the rotating shaft is shaped in the form of a round rod and the joint at which the rotating shaft in the form of a round rod joins the link lever includes an irregular portion provided along an outer periphery of the rotating shaft. With such construction, the plurality of irregular portions enable readily inhibiting the link levers from idling relative to the rotating shaft.

In the vehicle in which the rotating shaft and the plurality of link levers are formed integrally, preferably, there are further provided a casing portion, in which the stationary funnel and the moving funnel are arranged, and an air filter arranged in the casing portion to purify the air led to the intake port of the engine, and the parallel link including the rotating shaft and the plurality of link levers is arranged downstream of the air filter. When the rotating shaft and the plurality of link levers of the parallel link are formed integrally, the parallel link does not include removable parts such as screws, etc., so that it is possible to inhibit removable parts such as screws, etc. from dropping on the engine.

In the vehicle in this embodiment, preferably, a plurality of the moving funnels are connected to constitute a funnel portion and the link lever is arranged to support center portions of gravity of the plurality of funnel portions. With such construction, unlike the case where the points on the link lever at which the plurality of funnel portions are supported are not positioned on center portions of gravity of the plurality of funnel portions, it is possible to restrict the twist of the funnel portions, due to dead weights of the respective moving funnels, relative to those points on the link lever at which the plurality of funnel portions are supported so that the funnel portions can be smoothly moved.

The description, in particular, discloses in order to provide a vehicle capable of inhibiting a decrease in intake efficiency in the case where moving funnels are separated from stationary funnels, an embodiment of a motorcycle (vehicle), which comprises stationary funnels 27 through which air is led to an intake port 17a of an engine 14, moving funnels 28 arranged movably on intake sides of the stationary funnels 27 and cooperating with the stationary funnels 27 to permit the air to be led to the intake port 17a of the engine 14, and parallel links 42 mounted to the stationary funnels 27 to be turnable and including an upper link lever 43 and a lower link lever 44 which movably supports the moving funnels 28.

Further, according to a first preferred aspect, there is disclosed a vehicle comprising a stationary funnel, through which the air is led to an intake port of an engine, a moving funnel arranged movably on an intake side of the stationary funnel and cooperating with the stationary funnel to have the air led to the intake port of the engine, and a parallel link mounted in a predetermined location to be turnable and including a plurality of link levers which movably support the moving funnel.

Further, according to a second preferred aspect, in the case where the engine rotates at high speed, the link levers tum in a first direction whereby an opening of the moving funnel toward the stationary funnel is moved to a first position away from an opening of the stationary funnel on an intake side, and in the case where the engine rotates at low speed, the link levers turn in a second direction in opposition to the first direction whereby the opening of the moving funnel toward the stationary funnel is moved to a second position to abut against the opening of the stationary funnel on the intake side.

Further, according to a third preferred aspect, turning amounts of the link levers are adjusted so that an opened surface of the moving funnel on the intake side of the stationary funnel in the first position and an opened surface of the moving funnel on the intake side of the stationary funnel in the second position are positioned in the same manner as viewed in a direction in which the stationary funnel is opened.

Further, according to a fourth preferred aspect, the moving funnel comprises an upper support shaft and a lower support shaft, the stationary funnel comprises an upper rotating shaft and a lower rotating shaft, the upper support shaft and the upper rotating shaft are connected to each other through an upper link lever, the lower support shaft and the lower rotating shaft are connected to each other through a lower link lever, a position of the upper support shaft in the first position, as viewed in a direction in which the stationary funnel is opened, and a position of the upper support shaft in the second position, as viewed in a direction in which the stationary funnel is opened, are the same, and a position of the lower support shaft in the first position, as viewed in a direction in which the stationary funnel is opened, and a position of the lower support shaft in the second position, as viewed in a direction in which the stationary funnel is opened, are the same.

Further, according to a fifth preferred aspect, a position of the upper support shaft in the first position, as viewed in a direction in which the stationary funnel is opened, and a position of the lower support shaft in the first position, as viewed in a direction in which the stationary funnel is opened, are the same, and a position of the upper support shaft in the second position, as viewed in a direction in which the stationary funnel is opened, and a position of the lower support shaft in the second position, as viewed in a direction in which the stationary funnel is opened, are the same.

Further, according to a sixth preferred aspect, a support shaft supported by the link levers is provided integrally on the moving funnel and the link levers comprise a fitting portion fitted onto the support shaft to be turnable.

Further, according to a seventh preferred aspect, the engine comprises an engine having a plurality of cylinders, the stationary funnel and the moving funnel are respectively provided on every cylinder of the engine, and the adjacent moving funnels are formed integrally with each other through the support shaft which connects between the adjacent moving funnels.

Further, according to a eighth preferred aspect, the vehicle may further comprise a bush mounted to the support shaft to permit the link levers to turn relative to the support shaft, wherein the bush is structured to comprise a first split extending axially of the support shaft and to be elastically deformable so that a split width of the first split is increased.

Further, according to a ninth preferred aspect, the vehicle may further comprise a rib provided on the support shaft to engage with the first split of the bush.

Further, according to a tenth preferred aspect, the vehicle may further comprise a flange portion provided on an end of the bush to project radially of the support shaft and formed integrally with the first split, and the first split positioned on the flange portion of the bush is formed so that a split width is gradually increased in a direction in which the flange portion projects.

Further, according to an eleventh preferred aspect, the support shaft comprises a small-diameter portion to which the bush is mounted, the rib of the support shaft comprises a first rib and a second rib, the first rib of the support shaft is formed on an outer surface of the small-diameter portion to extend axially of the support shaft, and the second rib of the support shaft is formed on an end of the small-diameter portion to extend radially of the support shaft.

Further, according to a twelfth preferred aspect, the fitting portions of the link levers are structured to comprise a second split extending axially of the support shaft and to be elastically deformable so that a split width of the second split is increased.

Further, according to a thirteenth preferred aspect, the vehicle may further comprise a rotating shaft to turn the link levers, wherein the link levers are provided with a rotating shaft support hole into which the rotating shaft is inserted so that the link levers turn together with the rotating shaft, and a strut is provided integrally on the stationary funnel to support an end of the rotating shaft rotatably so that the rotating shaft is not moved axially.

Further, according to a fourteenth preferred aspect, the rotating shaft comprises a step to abut against an opened end of the rotating shaft support hole on the strut.

Further, according to a fifteenth preferred aspect, the link levers comprise a first stopper to abut against an abutment member to restrict turning of the link levers in the first direction in the case where the link levers turn in the first direction to have the moving funnel reached the first position, and a second stopper to abut against the abutment member to restrict turning of the link levers in the second direction in the case where the link levers turn in the second direction to have the moving funnel reached the second position.

Further, according to a sixteenth preferred aspect, the vehicle may further comprise a moving member to support and move the link levers, and a bias member to bias the moving member, wherein a biasing force of the bias member is transmitted to the link levers through the moving member whereby the link levers are turned, in the case where turning of the link levers in the first direction causes the first stopper to abut against the abutment member, a biasing force of the bias member is transmitted to the link levers through the moving member so that the link levers turn in the first direction, and in the case where turning of the link levers in the second direction causes the second stopper to abut against the abutment member, a biasing force of the bias member is transmitted to the link levers through the moving member so that the link levers turn in the second direction.

Further, according to a seventeenth preferred aspect, the abutment member comprises a strut provided integrally on the stationary funnel.

Further, according to a eighteenth preferred aspect, the stationary funnel comprises a screw insertion hole into which a screw is inserted, and is mounted to the engine by means of the screw inserted into the screw insertion hole, and the screw insertion hole of the stationary funnel is provided on an inner surface thereof with an engagement portion which is structured to engage with a head of the screw and to be elastically deformable toward an outside of the screw insertion hole from an inside thereof.

Further, according to a nineteenth preferred aspect, the vehicle may further comprise an elastic member mounted to an end of the moving funnel toward the stationary funnel.

Further, according to a twentieth preferred aspect, the vehicle may further comprise a rotating shaft which turns the plurality of link levers, wherein the rotating shaft is made of a metal, the plurality of link levers are made of a resin, and the rotating shaft made of a metal and the plurality of link levers made of a resin are formed integrally.

Further, according to a twenty-first preferred aspect, the rotating shaft made of a metal is shaped not to rotate at joints with the link levers made of a resin.

Further, according to a twenty-second preferred aspect, the rotating shaft is shaped in the form of a round rod and the joint at which the rotating shaft in the form of a round rod joins the link levers includes a flat surface portion.

Further, according to a twenty-third preferred aspect, the rotating shaft is shaped in the form of a round rod and the joint at which the rotating shaft in the form of a round rod joins the link levers includes an irregular portion provided along an outer periphery of the rotating shaft.

Further, according to a twenty-fourth preferred aspect, the vehicle may further comprise a casing portion, in which the stationary funnel and the moving funnel are arranged, and an air filter arranged in the casing portion to purify the air led to the intake port of the engine, wherein the parallel link including the rotating shaft and the plurality of link levers is arranged downstream of the air filter.

Further, according to a twenty-fifth preferred aspect, a plurality of the moving funnels are connected to constitute a funnel portion, and the link levers are arranged to support center portions of gravity of the plurality of funnel portions.

## Claims

1. Vehicle comprising:
a plurality of stationary funnels (27), through which the air is led to an intake port (17a) of an engine (14),
a plurality of moving funnels (28) arranged movably on an intake side of the stationary funnels (27) and cooperating with the stationary funnels (27) to have the air led to the intake port (17a) of the engine (14),
**characterized in that**
the vehicle further comprises a parallel link mechanism (42) including a plurality of link levers (43,44), which movably support the moving funnels (28), **in that** the plurality of link levers (43, 44) movably support the moving funnels (28) via a connecting portion that includes an upper connecting section (28b) connecting two adjacent moving funnels (28) and being formed integral with the two adjacent moving funnels (28), and a lower connecting section (28b) connecting the two adjacent moving funnels (28) and being formed integral with the two adjacent moving funnels (28); and **in that**
the plurality of link levers (43, 44) include an upper link lever (43) movably supporting the upper connecting section (28b) of the connecting portion of the two respective adjacent moving funnels (28) and being shared by said two adjacent moving funnels (28) which are connected to each other through the upper connecting section (28b), and a lower link lever (44) movably supporting the lower connecting section (28b) of the connecting portion of the two respective adjacent moving funnels (28) and being shared by said two adjacent moving funnels (28) which are connected to each other through the lower connecting section (28b).

2. Vehicle according to claim 1, wherein the link levers (43,44) are mounted to the stationary funnels (27) to be turnable.

3. Vehicle according to claim 1 or 2, wherein in the case where the engine rotates at high speed, the link levers turn in a first direction whereby an opening of the moving funnels toward the stationary funnels is moved to a first position away from an opening of the stationary funnels on an intake side, and in the case where the engine rotates at low speed, the link levers turn in a second direction in opposition to the first direction whereby the opening of the moving funnels toward the stationary funnels is moved to a second position to abut against the opening of the stationary funnels on the intake side.

4. Vehicle according to claim 3, wherein turning amounts of the link levers are adjusted so that an opened surface of the moving funnels on the intake side of the stationary funnels in the first position and an opened surface of the moving funnels on the intake side of the stationary funnels in the second position are positioned in the same manner as viewed in a direction in which the stationary funnels are opened.

5. Vehicle according to claim 4, wherein the moving funnels (28) comprise an upper support shaft (28b) and a lower support shaft (28b), and the stationary funnels (27) comprise an upper rotating shaft (41) and a lower rotating shaft (41), and wherein the upper support shaft (28b) and the upper rotating shaft (41) are connected to each other through an upper link lever (43), and the lower support shaft (28b) and the lower rotating shaft (41) are connected to each other through a lower link lever (44).

6. Vehicle according to claim 5, wherein a position of the upper support shaft (28b) in the first position, as viewed in a direction in which the stationary funnels (27) are opened, and a position of the upper support shaft (28b) in the second position, as viewed in a direction in which the stationary funnels are opened, are the same, and a position of the lower support shaft (41) in the first position, as viewed in a direction in which the stationary funnels (27) are opened, and a position of the lower support shaft (41) in the second position, as viewed in a direction in which the stationary funnels (27) are opened, are the same.

7. Vehicle according to claim 5 or 6, wherein a position of the upper support shaft (28b) in the first position, as viewed in a direction in which the stationary funnels (27) are opened, and a position of the lower support shaft (28b) in the first position, as viewed in a direction in which the stationary funnels (27) are opened, are the same, and a position of the upper support shaft (28b) in the second position, as viewed in a direction in which the stationary funnels (27) are opened, and a position of the lower support shaft (28b) in the second position, as viewed in a direction in which the stationary funnels (27) are opened, are the same.

8. Vehicle according to one of the claims 1 to 7, wherein a support shaft (28b) supported by the link levers (43,44) is provided integrally on two adjacent moving funnels (28) and the link levers (43,44) comprise a fitting portion (43a,44a) fitted onto the support shaft (28b) to be turnable.

9. Vehicle according to claim 8, wherein the engine (14) comprises a plurality of cylinders (16), a stationary funnel (27) and a moving funnel (28) are respectively provided on every cylinder of the engine, and two adjacent moving funnels (28) are formed integrally with each other through the support shaft (28b) which connects between said adjacent moving funnels (28).

10. Vehicle according to claim 9, further comprising bushes (33) mounted to the support shafts (28b) to permit the link levers (43,44) to turn relative to the support shafts (28b), wherein the bushes (33) are structured to comprise a first split (33a) extending axially of the respective support shaft and to be elastically deformable so that a split width of the first split is increased.

11. Vehicle according to claim 10, further comprising ribs (28d,28e) provided on the support shafts (28b) to engage with the first split (33a) of the bushes (33).

12. Vehicle according to one of the claims 9 to 11, further comprising flange portions (33b) provided on an end of the bushes (33) to project radially of the respective support shaft (28b) and formed integrally with the respective first split (33a), and the first split (33a) positioned on the flange portion of the respective bush (33) is formed so that a split width is gradually increased in a direction in which the flange portion projects.

13. Vehicle according to one of the claims 10 to 12, wherein the support shafts (28b) comprise a small-diameter portion to which a bush (33) is mounted, the ribs of the support shafts (28b) comprise a first rib (28d) and a second rib (28e), the first rib (28d) of the respective support shaft (28b) is formed on an outer surface of the small-diameter portion (28c) to extend axially of the respective support shaft (28b), and the second rib (28e) of the respective support shaft (28b) is formed on an end of the small-diameter portion (28c) to extend radially of the respective support shaft (28b).

14. Vehicle according to one of the claims 8 to 13, wherein the fitting portions (43a,44a) of the link levers (43,44) are structured to comprise a second split (43c,44c) extending axially of the respective support shaft (28b) and to be elastically deformable so that a split width of the second split is increased.

15. Vehicle according to one of the claims 1 to 14, comprising a rotating shaft (41) to turn the link levers (43,44), wherein the link levers (43,44) are provided with a rotating shaft support hole (27f) into which the rotating shaft (41) is inserted so that the link levers (43,44) turn together with the rotating shaft (41), and struts (27e) are provided integrally on the stationary funnels (27) to support an end of the rotating shaft (41) rotatably so that the rotating shaft is not moved axially.

16. Vehicle according to claim 15, wherein the rotating shaft (41) comprises a step to abut against an opened end of the rotating shaft support hole (27f) on the respective strut (27e).

17. Vehicle according to one of the claims 3 to 16, wherein the link levers (43,44) comprise a first stopper (43c) to abut against an abutment member (27e) to restrict turning of the link levers (43,44) in the first direction in the case where the link levers (43,44) turn in the first direction to have the moving funnels (28) reached the first position, and a second stopper (43d) to abut against the abutment member (27c) to restrict turning of the link levers (43,44) in the second direction in the case where the link levers (43,44) turn in the second direction to have the moving funnels (28) reached the second position.

18. Vehicle according to claim 17, further comprising a moving member (49) to support and move the link levers, and a bias member (51) to bias the moving member, wherein a biasing force of the bias member is transmitted to the link levers through the moving member whereby the link levers are turned, in the case where turning of the link levers in the first direction causes the first stopper to abut against an abutment member (27e), a biasing force of the bias member is transmitted to the link levers through the moving member so that the link levers turn in the first direction, and in the case where turning of the link levers in the second direction causes the second stopper to abut against an abutment member (27e), a biasing force of the bias member is transmitted to the link levers through the moving member so that the link levers turn in the second direction.

19. Vehicle according to claim 18, wherein the abutment member comprises a strut (27e) provided integrally on respective stationary funnels (27).

20. Vehicle according to one of the claims 1 to 19, wherein the stationary funnels (27) comprise a screw insertion hole (27c) into which a screw is insertable, and is mounted to the engine by means of the screw inserted into the screw insertion hole, and the screw insertion hole of the respective stationary funnel is provided on an inner surface thereof with an engagement portion (27d) which is structured to engage with a head of the screw and to be elastically deformable toward an outside of the screw insertion hole from an inside thereof.

21. Vehicle according to one of the claims 1 to 20, further comprising an elastic member (34) mounted to an end of the moving funnels toward the stationary funnels.

22. Vehicle according to one of the claims 1 to 21, wherein a rotating shaft (41) which turns the plurality of link levers is made of a metal, the plurality of link levers are made of a resin, and the rotating shaft made of a metal and the plurality of link levers made of a resin are formed integrally.

23. Vehicle according to claim 22, wherein the rotating shaft made of a metal is shaped not to rotate at joints with the link levers made of a resin.

24. Vehicle according to claim 23, wherein the rotating shaft is shaped in the form of a round rod and the joint at which the rotating shaft in the form of a round rod joins the link levers includes a flat surface portion.

25. Vehicle according to claim 23, wherein the rotating shaft is shaped in the form of a round rod and the joint at which the rotating shaft in the form of a round rod joins the link levers includes an irregular portion provided along an outer periphery of the rotating shaft.

26. Vehicle according to one of the claims 1 to 25, further comprising a casing portion (25), in which the stationary funnels and the moving funnels are arranged, and an air filter (26) arranged in the casing portion to purify the air led to the intake port of the engine, wherein the parallel link mechanism (42) including the rotating shaft and the plurality of link levers is arranged downstream of the air filter.

27. Vehicle according to one of the claims 1 to 26, wherein the plurality of the moving funnels are connected to constitute a funnel portion, and the link levers are arranged to support center portions of gravity of the plurality of funnel portions.

## Patentansprüche

1. Fahrzeug, umfassend:
eine Vielzahl von stationären Trichtern (27), durch welche die Luft zu einem Ansaugkanal (17a) eines Motors (14) geleitet wird,
eine Vielzahl von beweglichen Trichtern (28), die beweglich auf einer Ansaugseite der stationären Trichter (27) angeordnet sind und mit den stationären Trichtern (27) zusammenwirken, um die Luft zu dem Ansaugkanal (17a) des Motors (14) zu leiten,
**dadurch gekennzeichnet, dass**
das Fahrzeug des Weiteren einen Parallelgestängemechanismus (42) mit einer Vielzahl von Anlenkhebeln (43, 44) umfasst, welche die beweglichen Trichter (28) beweglich lagern, dass
die Vielzahl von Anlenkhebeln (43, 44) die beweglichen Trichter (28) über einen Verbindungsteil beweglich lagern, der einen oberen Verbindungsabschnitt (28b), welcher zwei benachbarte bewegliche Trichter (28) miteinander verbindet und integral mit den zwei benachbarten beweglichen Trichtern (28) ausgebildet ist, und einen unteren Verbindungsabschnitt (28b), der die zwei benachbarten beweglichen Trichter (28) miteinander verbindet und integral mit den zwei benachbarten beweglichen Trichtern (28) ausgebildet ist, aufweist, und dass
die Vielzahl von Anlenkhebeln (43, 44) einen oberen Anlenkhebel (43), der den oberen Verbindungsabschnitt (28b) des Verbindungsteils der zwei jeweiligen benachbarten beweglichen Trichter (28) beweglich lagert und von den zwei benachbarten beweglichen Trichtern (28) geteilt wird, die durch den oberen Verbindungsabschnitt (28b) miteinander verbunden sind, und einen unteren Anlenkhebel (44) aufweist, der den unteren Verbindungsabschnitt (28b) des Verbindungsteils der zwei jeweiligen benachbarten beweglichen Trichter (28) beweglich lagert und von den zwei benachbarten beweglichen Trichtern (28) geteilt wird, welche durch den unteren Verbindungsabschnitt (28b) miteinander verbunden sind.

2. Fahrzeug nach Anspruch 1, wobei die Anlenkhebel (43, 44) drehbar an den stationären Trichtern (27) montiert sind.

3. Fahrzeug nach Anspruch 1 oder 2, wobei sich die Anlenkhebel bei einer hohen Motordrehzahl in einer ersten Richtung drehen, wodurch eine den stationären Trichtern zugewandte Öffnung der beweglichen Trichter auf eine erste Position weg von einer Öffnung der stationären Trichter auf einer Ansaugseite bewegt wird, und wobei sich die Anlenkhebel bei einer niedrigen Motordrehzahl in einer zweiten, der ersten Richtung entgegengesetzten Richtung drehen, wodurch die den stationären Trichtern zugewandte Öffnung der beweglichen Trichter auf eine zweite Position bewegt wird, so dass sie an die Öffnung der stationären Trichter auf der Ansaugseite anliegt.

4. Fahrzeug nach Anspruch 3, wobei der Drehbetrag der Anlenkhebel so eingestellt wird, dass eine geöffnete Fläche der beweglichen Trichter auf der Ansaugseite der stationären Trichter in der ersten Position und eine geöffnete Fläche der beweglichen Trichter auf der Ansaugseite der stationären Trichter in der zweiten Position genauso ausgerichtet sind, wie aus einer Richtung betrachtet, in der die stationären Trichter geöffnet werden.

5. Fahrzeug nach Anspruch 4, wobei die beweglichen Trichter (28) eine obere Trägerwelle (28b) und eine untere Trägerwelle (28b) umfassen und die stationären Trichter (27) eine obere Drehwelle (41) und eine untere Drehwelle (41) umfassen, und wobei die obere Trägerwelle (28b) und die obere Drehwelle (41) durch einen oberen Anlenkhebel (43) miteinander verbunden sind und die untere Trägerwelle (28b) und die untere Drehwelle (41) durch einen unteren Anlenkhebel (44) miteinander verbunden sind.

6. Fahrzeug nach Anspruch 5, wobei eine Position der oberen Trägerwelle (28b) in der ersten Position, betrachtet in einer Richtung, in der die stationären Trichter (27) geöffnet werden, und eine Position der oberen Trägerwelle (28b) in der zweiten Position, betrachtet in einer Richtung, in der die stationären Trichter geöffnet werden, identisch sind, und eine Position der unteren Trägerwelle (41) in der ersten Position, betrachtet in einer Richtung, in der die stationären Trichter (27) geöffnet werden, und eine Position der unteren Trägerwelle (41) in der zweiten Position, betrachtet in einer Richtung in der die stationären Trichter (27) geöffnet werden, identisch sind.

7. Fahrzeug nach Anspruch 5 oder 6, wobei eine Position der oberen Trägerwelle (28b) in der ersten Position, betrachtet in einer Richtung, in der die stationären Trichter (27) geöffnet werden, und eine Position der unteren Trägerwelle (28b) in der ersten Position, betrachtet in einer Richtung, in der die stationären Trichter (27) geöffnet werden, identisch sind, und eine Position der oberen Trägerwelle (28b) in der zweiten Position, betrachtet in einer Richtung, in der die stationären Trichter (27) geöffnet werden, und eine Position der unteren Trägerwelle (28b) in der zweiten Position, betrachtet in einer Richtung in der die stationären Trichter (27) geöffnet werden, identisch sind.

8. Fahrzeug nach einem der Ansprüche 1 bis 7, wobei eine Trägerwelle (28b), die von den Anlenkhebeln (43, 44) getragen wird, integral an zwei benachbarten beweglichen Trichtern (28) ausgebildet ist und die Anlenkhebel (43, 44) einen Befestigungsteil (43a, 44a) umfassen, der drehbar an der Trägerwelle (28b) befestigt ist.

9. Fahrzeug nach Anspruch 8, wobei der Motor (14) eine Vielzahl von Zylindern (16) aufweist, wobei ein stationärer Trichter (27) und ein beweglicher Trichter (28) jeweils an den einzelnen Motorzylindern ausgebildet ist, und wobei zwei benachbarte bewegliche Trichter (28) durch die Trägerwelle (28), welche zwischen den benachbarten beweglichen Tunneln (28) verbunden ist, integral miteinander ausgebildet sind.

10. Fahrzeug nach Anspruch 9, des Weiteren umfassend Buchsen (33), die an den Trägerwellen (28b) montiert sind, damit sich die Anlenkhebel (43, 44) relativ zu den Trägerwellen (28b) drehen können, wobei die Buchsen (33) so strukturiert sind, dass sie einen ersten Spalt (33a) umfassen, der sich axial von der jeweiligen Trägerwelle erstreckt und elastisch verformbar ist, so dass eine Spaltbreite des ersten Spaltes zunimmt.

11. Fahrzeug nach Anspruch 10, des Weiteren umfassend Rippen (28d, 28e), die an den Trägerwellen (28b) ausgebildet sind, um mit dem ersten Spalt (33a) der Buchsen (33) in Eingriff zu kommen.

12. Fahrzeug nach einem der Ansprüche 9 bis 11, des Weiteren umfassend Flanschabschnitte (33b), die an einem Ende der Buchsen (33) bereitgestellt sind, so dass sie radial von der jeweiligen Trägerwelle (28b) vorstehen und integral mit dem jeweiligen ersten Spalt (33a) ausgebildet sind, wobei der erste an dem Flanschabschnitt der jeweiligen Buchse (33) angeordnete Spalt (33a) so ausgebildet ist, dass eine Spaltbreite fortschreitend in einer Richtung zunimmt, in welcher der Flanschabschnitt vorsteht.

13. Fahrzeug nach einem der Ansprüche 10 bis 12, wobei die Trägerwellen (28b) einen Abschnitt mit kleinem Durchmesser umfassen, an dem eine Buchse (33) montiert ist, die Rippen der Trägerwellen (28b) eine erste Rippe (28d) und eine zweite Rippe (28e) umfassen, die erste Rippe (28d) der jeweiligen Trägerwelle (28d) so an einer Außenfläche des Abschnitts mit kleinem Durchmesser (28c) ausgebildet ist, dass sie sich axial von der jeweiligen Trägerwelle (28b) erstreckt, und die zweite Rippe (28e) der jeweiligen Trägerwelle (28b) so an einem Ende des Abschnitts mit kleinem Durchmesser (28c) ausgebildet ist, dass sie sich radial von der jeweiligen Trägerwelle (28b) erstreckt.

14. Fahrzeug nach einem der Ansprüche 8 bis 13, wobei die Befestigungsabschnitte (43a, 44a) der Anlenkhebel (43, 44) so strukturiert sind, dass sie einen zweiten Spalt (43c, 44c) umfassen, der sich axial von der jeweiligen Trägerwelle (28b) erstreckt und elastisch verformbar ist, so dass eine Spaltbreite des zweiten Spalts zunimmt.

15. Fahrzeug nach einem der Ansprüche 1 bis 14, umfassend eine Drehwelle (41) zum Drehen der Anlenkhebel (43, 44), wobei die Anlenkhebel (43, 44) mit einer Drehwellen-Lagerbohrung (27f) versehen sind, in welche die Drehwelle (41) eingesetzt ist, so dass sich die Anlenkhebel (43, 44) gemeinsam mit der Drehwelle (41) drehen, und Streben (27e) integral an den stationären Trichtern (27) ausgebildet sind, um ein Ende der Drehwelle (41) drehbar so zu lagern, dass die Drehwelle nicht axial bewegt wird.

16. Fahrzeug nach Anspruch 15, wobei die Drehwelle (41) eine Stufe umfasst, so dass sie an einem geöffneten Ende der Drehwellen-Lagerbohrung (27f) an der jeweiligen Strebe (27e) anliegt.

17. Fahrzeug nach einem der Ansprüche 3 bis 16, wobei die Anlenkhebel (43, 44) einen ersten Anschlag (43c) umfassen, der an einem Anlageglied (27e) zum Anliegen kommt, um eine Drehung der Anlenkhebel (43, 44) in der ersten Richtung zu beschränken, wenn sich die Anlenkhebel (43, 44) in der ersten Richtung drehen, bis die beweglichen Trichter (28) die erste Position erreichen, und einen zweiten Anschlag (43d), der an dem Anlageglied (27c) zum Anliegen kommt, um eine Drehung der Anlenkhebel (43, 44) in der zweiten Richtung zu beschränken, wenn sich die Anlenkhebel (43, 44) in der zweiten Richtung drehen, bis die beweglichen Trichter (28) die zweite Position erreichen.

18. Fahrzeug nach Anspruch 17, des Weiteren umfassend ein Bewegungselement (49) zum Lagern und Bewegen der Anlenkhebel und ein Vorspannelement (51) zum Vorspannen des Bewegungselements, wobei eine Vorspannkraft des Vorspannelements durch das Bewegungselement auf die Anlenkhebel übertragen wird, wodurch die Anlenkhebel gedreht werden, wobei, wenn die Drehung der Anlenkhebel in der ersten Richtung zum Anliegen des ersten Anschlags an dem Anlageglied (27e) führt, eine Vorspannkraft des Vorspannelements durch das Bewegungselement so auf die Anlenkhebel übertragen wird, dass sich die Anlenkhebel in der ersten Richtung bewegen, und wobei, wenn die Drehung der Anlenkhebel in der zweiten Richtung zum Anliegen des zweiten Anschlags an dem Anlageglied (27e) führt, die Vorspannkraft des Vorspannelements durch das Bewegungselement so auf die Anlenkhebel übertragen wird, dass sich die Anlenkhebel in der zweiten Richtung bewegen.

19. Fahrzeug nach Anspruch 18, wobei das Anlageglied eine Strebe (27e) umfasst, die integral an den jeweiligen stationären Trichtern (27) ausgebildet ist.

20. Fahrzeug nach einem der Ansprüche 1 bis 19, wobei die stationären Trichter (27) eine Schraubeneinsatzöffnung (27c) umfassen, in welche eine Schraube einsetzbar ist, und mithilfe der in die Schraubeneinsatzöffnung eingesetzten Schraube an dem Motor montiert sind, und wobei die Schraubeneinsatzöffnung des jeweiligen stationären Trichters (27d) an einer Innenseite mit einem Eingriffsabschnitt (27d) versehen ist, der so aufgebaut ist, dass er mit einem Kopf der Schraube in Eingriff kommen kann und von seiner Innenseite in Richtung einer Außenseite der Schraubeneinsatzöffnung elastisch verformbar ist.

21. Fahrzeug nach einem der Ansprüche 1 bis 20, des Weiteren umfassend ein elastisches Element (34), das an einem Ende der beweglichen Trichter in Richtung der stationären Trichter montiert ist.

22. Fahrzeug nach einem der Ansprüche 1 bis 21, wobei eine Drehwelle (41), welche die Vielzahl von Anlenkhebeln dreht, aus Metall besteht, die Vielzahl von Anlenkhebeln aus Kunstharz besteht und die aus Metall bestehende Drehwelle und die aus Kunstharz bestehende Vielzahl von Anlenkhebeln integral ausgebildet sind.

23. Fahrzeug nach Anspruch 22, wobei die aus Metall bestehende Drehwelle so geformt ist, dass sie sich an Verbindungsstellen mit den aus Kunstharz bestehenden Anlenkhebeln nicht dreht.

24. Fahrzeug nach Anspruch 23, wobei die Drehwelle in Form einer runden Stange ausgebildet ist und die Verbindungstelle, an der die Drehwelle in Form einer runden Stange mit den Anlenkhebeln verbunden ist, einen flachen Oberflächenabschnitt aufweist.

25. Fahrzeug nach Anspruch 23, wobei die Drehwelle in Form einer runden Stange ausgebildet ist und die Verbindungstelle, an der die Drehwelle in Form einer runden Stange mit den Anlenkhebeln verbunden ist, einen unregelmäßigen Abschnitt entlang einem Außenumfang der Drehwelle aufweist.

26. Fahrzeug nach einem der Ansprüche 1 bis 25, des Weiteren umfassend ein Gehäuseteil (25), in dem die stationären Trichter und die beweglichen Trichter angeordnet sind, und einen Luftfilter (26), der in dem Gehäuseteil angeordnet ist, um die zu dem Ansaugkanal des Motors geleitete Luft zu reinigen, wobei der Parallelgestängemechanismus mit der Drehwelle und der Vielzahl von Anlenkhebeln hinter dem Luftfilter angeordnet ist.

27. Fahrzeug nach einem der Ansprüche 1 bis 26, wobei die Vielzahl von beweglichen Trichtern miteinander verbunden ist, um einen Trichterteil zu bilden und die Anlenkhebel so angeordnet sind, dass sie Schwerpunktabschnitte der Vielzahl von Trichterteilen tragen.

## Revendications

1. Véhicule comprenant :
une pluralité de pipes fixes en forme d'entonnoir (27) au travers desquelles est conduit l'air vers un conduit d'admission (17a) appartenant à un moteur thermique (14),
une pluralité de pièces mobiles en forme d'entonnoir (28) agencées pour pouvoir se déplacer sur le côté d'admission des pipes fixes en forme d'entonnoir (27) et coopérant avec les pipes fixes en forme d'entonnoir (27) pour que l'air soit conduit vers le conduit d'admission (17a) du moteur thermique (14),
**caractérisé en ce que**
le véhicule comprend en outre un mécanisme de liaison parallèle (42) incluant une pluralité de leviers de liaison (43, 44) qui supportent avec une possibilité de mouvement les pièces mobiles en forme d'entonnoir (28), **en ce que**
la pluralité de leviers de liaison (43, 44) supporte avec une possibilité de mouvement les pièces mobiles en forme d'entonnoir (28) par l'intermédiaire d'une partie de raccordement qui inclut une section supérieure de raccordement (28b) reliant deux pièces mobiles en forme d'entonnoir (28) adjacentes et étant formée en une seule pièce avec les deux pièces mobiles en forme d'entonnoir (28) adjacentes, ainsi qu'une section inférieure de raccordement (28b) reliant les deux pièces mobiles en forme d'entonnoir (28) adjacentes et étant formée en une seule pièce avec les deux pièces mobiles en forme d'entonnoir (28) adjacentes, et **en ce que**
la pluralité de leviers de liaison (43, 44) inclut un levier supérieur de liaison (43) supportant avec une possibilité de mouvement la section supérieure de raccordement (28b) de la partie de raccordement des deux pièces mobiles en forme d'entonnoir (28) adjacentes respectives et étant partagée par lesdites deux pièces mobiles en forme d'entonnoir (28) adjacentes qui sont reliées l'une à l'autre par l'intermédiaire de la section supérieure de raccordement (28b), ainsi qu'un levier inférieur de liaison (44) supportant avec une possibilité de mouvement la section inférieure de raccordement (28b) de la partie de raccordement des deux pièces mobiles en forme d'entonnoir (28) adjacentes respectives et étant partagée par lesdites de pièces mobile en forme d'entonnoir (28 adjacentes qui sont reliées l'une à l'autre par l'intermédiaire de la section inférieure de raccordement (28b).

2. Véhicule selon la revendication 1, dans lequel les leviers de liaison (43, 44) sont montés sur les pipes fixes en forme d'entonnoir (27) pour pouvoir tourner.

3. Véhicule selon la revendication 1 ou 2, dans lequel, dans le cas où le moteur thermique tourne à grande vitesse, les leviers de liaison tournent dans un premier sens grâce à quoi l'ouverture des pièces mobiles en forme d'entonnoir vers les pipes fixes en forme d'entonnoir se déplace dans une première position à distance de l'ouverture des pipes fixes en forme d'entonnoir sur le côté de l'admission, et dans le cas où le moteur thermique tourne à basse vitesse, les leviers de liaison tournent dans un second sens opposé au premier sens grâce à quoi l'ouverture des pièces mobiles en forme d'entonnoir vers les pipes fixes en forme d'entonnoir se déplace vers une seconde position pour venir en butée contre les ouvertures des pipes fixes en forme d'entonnoir sur le côté de l'admission.

4. Véhicule selon la revendication 3, dans lequel les valeurs de rotation des leviers de liaison sont ajustées de telle sorte que la surface ouverte des pièces mobiles en forme d'entonnoir du côté de l'admission des pipes fixes en forme d'entonnoir dans la première position et que la surface ouverte des pièces mobiles en forme d'entonnoir sur le côté de l'admission des pipes fixes en forme d'entonnoir dans la seconde position soient positionnées de la même manière que celle qui est vue dans une direction dans laquelle les pipes fixes en forme d'entonnoir sont ouvertes.

5. Véhicule selon la revendication 4, dans lequel les pièces mobiles en forme d'entonnoir (28) comprennent un arbre supérieur de support (28b) et un arbre inférieur de support (28b), et les pipes fixes en forme d'entonnoir (27) comprennent un arbre supérieur de rotation (41) et un arbre inférieur de rotation (41) tout comme dans lequel l'arbre supérieur de support (28b) et l'arbre supérieur de rotation (41) sont reliés l'un à l'autre par l'intermédiaire du levier supérieur de liaison (43) et dans lequel l'arbre inférieur de support (28b) et l'arbre inférieur de rotation (41) sont reliés l'un à l'autre par l'intermédiaire du levier inférieur de liaison (44).

6. Véhicule selon la revendication 5, dans lequel la position de l'arbre supérieur de support (28b) dans la première position, tel qu'il est vu dans une direction dans laquelle les pipes fixes en forme d'entonnoir (27) sont ouvertes, ainsi que la position de l'arbre supérieur de support (28b) dans la seconde position, tel qu'il est vu dans une direction dans laquelle les pipes fixes en forme d'entonnoir sont ouvertes, sont identiques, et la position de l'arbre inférieur de support (41) dans la première position, tel qu'il est vu dans une direction dans laquelle les pipes fixes en forme d'entonnoir (27) sont ouvertes et la position de l'arbre inférieur de support (41) dans la seconde position, tel qu'il est vu dans une direction dans laquelle les pipes fixes en forme d'entonnoir (27) sont ouvertes, sont identiques.

7. Véhicule selon la revendication 5 ou 6, dans lequel la position de l'arbre supérieur de support (28b) dans la première position, tel qu'il est vu dans une direction dans laquelle les pipes fixes en forme d'entonnoir (27) sont ouvertes, et la position de l'arbre inférieur de support (28b) dans la première position, tel qu'il est vu dans une direction dans laquelle les pipes fixes en forme d'entonnoir (27) sont ouvertes, sont identiques, et la position de l'arbre supérieur de support (28b) dans la seconde position, tel qu'il est vu dans une direction dans laquelle les pipes fixes en forme d'entonnoir (27) sont ouvertes et la position de l'arbre inférieur de support (28b) dans la seconde position, tel qu'il est vu dans une direction dans laquelle les pipes fixes en forme d'entonnoir (27) sont ouvertes, sont identiques.

8. Véhicule selon l'une des revendications 1 à 7, dans lequel un arbre de support (28b) supporté par les leviers de liaison (43, 44) est prévu en une seule pièce sur deux pièces mobiles en forme d'entonnoir (28) adjacentes, et les leviers de liaison (43, 44) comprennent une partie d'adaptation (43a, 44a) ajustée sur l'arbre de support (28b) afin de pouvoir tourner.

9. Véhicule selon la revendication 8, dans lequel le moteur thermique (14) comprend une pluralité de cylindres (16), une pipe fixe en forme d'entonnoir (27) et une pièce mobile en forme d'entonnoir (28) qui sont respectivement prévues sur chaque cylindre du moteur thermique, et deux pièces mobiles en forme d'entonnoir (28) adjacentes sont formées l'une avec l'autre en une seule pièce par l'intermédiaire de l'arbre de support (28b) qui réalise un raccord entre lesdites pièces mobiles en forme d'entonnoir (28) adjacentes.

10. Véhicule selon la revendication 9, comprenant en outre des coussinets (33) montés sur les arbres de support (28b) afin d'autoriser la rotation des leviers de liaison (43, 44) par rapport aux arbres de support (28b), dans lequel les coussinets (33) sont structurés pour comprendre une première fente (33a) s'étendant dans l'axe de l'arbre respectif de support et devant se déformer élastiquement de telle sorte que la largeur de fente de la première fente augmente.

11. Véhicule selon la revendication 10, comprenant en outre des nervures (28d, 28e) prévues sur les arbres de support (28b) afin de se mettre en prise avec la première fente (33a) des coussinets (33).

12. Véhicule selon l'une des revendications 9 à 11, comprenant en outre des parties de collerettes (33b) prévues sur une extrémité des coussinets (33) afin de dépasser de manière radiale de l'arbre de support respectif (28b) et formées en une seule pièce avec la première fente respective (33a), et la première fente (33a), positionnée sur la collerette du coussinet respectif (33), est formée de telle sorte que la largeur de fente augmente progressivement dans une direction dans laquelle dépasse la collerette.

13. Véhicule selon l'une des revendications 10 à 12, dans lequel les arbres de support (28b) comprennent une partie de faible diamètre sur laquelle est monté un coussinet (33), les nervures des arbres de support (28b) comprennent une première nervure (28d) et une seconde nervure (28e), la première nervure (28d) de l'arbre de support respectif (28b) est formée sur la surface externe de la partie de faible diamètre (28c) afin de s'étendre dans l'axe de l'arbre de support respectif (28b) et la seconde nervure (28e) de l'arbre de support respectif (28b) est formée sur une extrémité de la partie de faible diamètre (28c) afin de s'étendre radialement de l'arbre de support respectif (28b).

14. Véhicule selon l'une des revendications 8 à 13, dans lequel les parties d'adaptation (43a, 44a) des leviers de liaison (43, 44) sont structurées pour comprendre une seconde fente (43c, 44c) s'étendant dans l'axe de l'arbre respectif de support (28b) ainsi que pour être déformable élastiquement de telle sorte que la largeur de fente de la seconde fente augmente.

15. Véhicule selon l'une des revendications 1 à 14, comprenant un arbre tournant (41) destiné à faire tourner les leviers de liaison (43, 44), dans lequel les leviers de liaison (43, 44) sont munis d'un alésage de support de l'arbre tournant (27f) dans lequel est inséré l'arbre tournant (41) de telle sorte que les leviers de liaison (43, 44) tournent ensemble avec l'arbre tournant (41), et des entretoises de renforcement (27e) sont prévus en faisant une seule pièce sur les pipes fixes en forme d'entonnoir (27) afin de supporter une extrémité de l'arbre tournant (41) avec une possibilité de rotation de telle sorte que l'arbre tournant ne se déplace pas axialement.

16. Véhicule selon la revendication 15, dans lequel l'arbre tournant (41) comprend un échelon qui vient en butée contre une extrémité ouverte de l'alésage de support de l'arbre tournant (27f) sur l'entretoise de renforcement respective (27e).

17. Véhicule selon l'une des revendications 3 à 16, dans lequel les leviers de liaison (43, 44) comprennent un premier arrêt (43c) qui vient en butée contre un élément d'arrêt (27e) afin de restreindre la rotation des leviers de liaison (43, 44) dans le premier sens dans le cas où les leviers de liaison (43, 44) tournent dans le premier sens afin que les pièces mobiles en forme d'entonnoir (28) atteignent la première position, ainsi qu'un second arrêt (43d) qui vient en butée contre l'élément d'arrêt (27c) afin de restreindre la rotation des leviers de liaison (43, 44) dans le second sens dans le cas où les leviers de liaison (43, 44) tournent dans le second sens afin que les pièces mobiles en forme d'entonnoir (28) atteignent la seconde position.

18. Véhicule selon la revendication 17, comprenant en outre un élément mobile (49) destiné à supporter et déplacer les leviers de liaison, ainsi qu'un élément de sollicitation (51) destiné à contraindre l'élément mobile, dans lequel une force de sollicitation de l'élément de sollicitation est transmise aux leviers de liaison par l'intermédiaire de l'élément mobile grâce à quoi on fait tourner les leviers de liaison, dans le cas où la rotation des leviers de liaison dans le premier sens amène le premier arrêt à venir en butée contre l'élément d'arrêt (27e), une force de sollicitation de l'élément de sollicitation est transmise aux leviers de liaison par l'intermédiaire de l'élément mobile de telle sorte que les leviers de liaison tournent dans le premier sens et, dans le cas où la rotation des leviers de liaison dans le second sens amène la seconde butée à venir en butée contre un élément d'arrêt (27e), une force de sollicitation de l'élément de sollicitation est transmise aux leviers de liaison par l'intermédiaire de l'élément mobile de telle sorte que les leviers de liaison tournent dans le second sens.

19. Véhicule selon la revendication 18, dans lequel l'élément d'arrêt comprend une entretoise de renforcement (27e) prévue en une seule pièce sur les pipes fixes en forme d'entonnoir (27).

20. Véhicule selon l'une des revendications 1 à 19, dans lequel les pipes fixes en forme d'entonnoir (27) comprennent un alésage d'insertion de vis (27c) dans lequel on peut insérer une vis, et ils sont montés sur le moteur thermique au moyen de la vis insérée dans l'alésage d'insertion de vis, et l'alésage d'insertion de vis de la pipe fixe en forme d'entonnoir respective est muni sur sa surface interne d'une partie de mise en prise (27d) qui est structurée pour former une prise avec la tête de la vis et pour être déformable élastiquement vers l'extérieur de l'alésage d'insertion de vis depuis sa partie intérieure.

21. Véhicule selon l'une des revendications 1 à 20, comprenant en outre un élément résilient (34) monté sur une extrémité des pièces mobiles en forme d'entonnoir vers les pipes fixes en forme d'entonnoir.

22. Véhicule selon l'une des revendications 1 à 21, dans lequel l'arbre tournant (41) qui met en rotation la pluralité des leviers de liaison est constitué d'un métal, la pluralité de leviers de liaison est constituée d'une résine, et l'arbre tournant constitué d'un métal avec la pluralité de leviers de liaison constituée d'une résine sont formés en une seule pièce.

23. Véhicule selon la revendication 22, dans lequel l'arbre tournant constitué d'un métal est formé de façon à ne pas tourner au niveau de joints avec les leviers de liaison constitués de résine

24. Véhicule selon la revendication 23, dans lequel l'arbre tournant prend la forme d'une tige ronde et le joint, auquel l'arbre tournant sous la forme d'une tige ronde est réuni aux leviers de liaison, inclut une partie de surface plane.

25. Véhicule selon la revendication 23, dans lequel l'arbre tournant prend la forme d'une tige ronde et le joint, auquel l'arbre tournant sous la forme d'une tige ronde est réuni aux leviers de liaison, inclut une partie irrégulière prévue le long de la périphérie externe de l'arbre tournant.

26. Véhicule selon l'une des revendications 1 à 25, comprenant en outre une partie formant carter (25) dans laquelle sont agencées les pipes fixes en forme d'entonnoir et les pièces mobiles en forme d'entonnoir, ainsi qu'un filtre à air (26) agencé dans la partie formant carter afin de purifier l'air dirigé vers le conduit d'admission du moteur thermique, dans lequel le mécanisme de liaison parallèle (42), incluant l'arbre tournant et la pluralité de leviers de liaison, est disposé en aval du filtre à air.

27. Véhicule selon l'une des revendications 1 à 26, dans lequel la pluralité de pièces mobiles en forme d'entonnoir est raccordée pour constituer une partie formant entonnoir, et les leviers de liaison sont agencés pour supporter les parties centrales porteuses de la gravité de la pluralité de parties formant entonnoir.
